# EUROPEAN PATENT APPLICATION

(11) **EP 1 837 250 A1**
(43) Date of publication of application: **26.09.2007**
(21) Application number: 07104622.1
(22) Date of filing: 21.03.2007
(51) Int. Cl.: B60R 21/045, B60R 21/05

(54) **Knee bolster**

(30) Priority: 23.03.2006 JP 2006080220; 25.12.2006 JP 2006347926
(71) Applicant: Nissan Motor Company Limited, Kanagawa-ku Yokohama-shi, Kanagawa 221-0023 (JP)
(72) Inventor: Makita, Masashi, Atsugi-shi Kanagawa 243-0192 (JP); Kobayashi, Izumi, Atsugi-shi Kanagawa 243-0192 (JP); Pal, Chinmoy, Atsugi-shi Kanagawa 243-0192 (JP)
(74) Representative: Holmes, Matthew William

(57) **Abstract**

An impact energy absorbing knee bolster system is basically provided with a lateral offset input restriction structure and a vertical offset input absorption structure. The lateral offset input restriction structure restricts a lateral offset input component of an impact load imparted by a passenger's knee against the knee bolster to lateral direction and promotes deformation of the knee bolster during a collision. The vertical offset input absorption structure absorbs a vertical offset input component of the impact load imparted by the passenger's knee against the knee bolster and to promote deformation of the knee bolster during the collision.

## Description

The present invention relates to a knee bolster for protecting the knees of a passenger during a vehicle collision and particularly, but not exclusively, to an impact energy absorbing knee bolster system that can absorb the impact energy irrespective of variations in the position of the passenger's knee relative to the knee bolster. Aspects of the invention relate to an apparatus, to a system, to a method and to a vehicle.

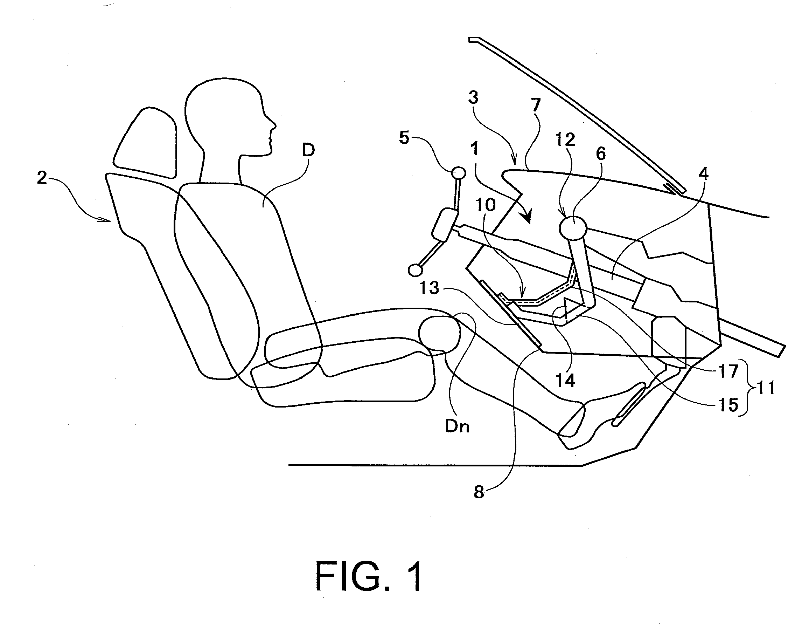

Vehicles are typically provided with a knee bolster. In a case of a conventional driver's side knee bolster, the knee bolster is typically mounted to the steering column in such a position as to face the knees of a driver using a rubber bushing and a stay such that the knee bolster can rotate freely. When a knee of a driver impacts the knee bolster in a direction that is diagonal with respect to the widthwise (transverse or lateral) direction of the vehicle, the knee bolster rotates so as to face squarely toward the passenger and absorb the impact energy of both knees in a balanced manner (e.g., Japanese Unexamined Utility Model Publication No. 04-70556 (page 6, Figure 1)).

The conventional knee bolster is configured to handle situations in which the knees of a passenger impact the knee bolster in a direction that is laterally offset toward a widthwise (lateral) direction of the vehicle. However, since the conventional knee bolster is mounted such that its angle with respect to the vertical direction is fixed, it may not be able to absorb the impact energy efficiently when the physique of the passenger is such that passenger's knees are vertically offset with respect to the knee bolster. This is particularly the case when the passenger is larger or smaller than average.

It is an aim of the invention to address this issue and to improve upon known technology. Embodiments of the invention may provide an impact energy absorbing knee bolster system and a method for absorbing impact energy of a passenger's knee that can efficiently absorb the impact energy regardless of whether the direction in which a passenger's knees impact the knee bolster is laterally offset in the widthwise direction of the vehicle, the vertical direction of the vehicle, or both. Other aims and advantages of the invention will become apparent from the following description, claims and drawings.

Aspects of the invention therefore provide an apparatus, a method and a vehicle as claimed in the appended claims.

According to another aspect of the invention there is provided an impact energy absorbing knee bolster system comprising a lateral offset input restriction structure arranged to restrict a lateral offset input component of an impact load imparted by a passenger's knee in a laterally offset direction and to promote deformation during a collision and a vertical offset input absorption structure arranged to absorb a vertical offset input component of the impact load imparted by the passenger's knee and to promote deformation during the collision.

In an embodiment, the lateral offset input restriction structure includes a deformation accepting structure located between a load input part and a vehicle structural member to deform in response to the impact load imparted by the passenger's knee during the collision and a load transmitting support member located between the load input part and the vehicle structural member, and arranged to cooperate with the deformation accepting structure to restrict lateral movement of the deformation accepting structure in response to the impact load imparted by the passenger's knee during the collision.

In an embodiment, the lateral offset input restriction structure includes a deformation accepting structure located between an load input part and a vehicle structural member, and arranged to deform in response to the impact load imparted by the passenger's knee during the collision and a load transmitting support member located between the load input part and the vehicle structural member to fit with the deformation accepting structure to restrict mutual lateral movement of the deformation accepting structure in response to the impact load imparted by the passenger's knee during the collision.

In an embodiment, the lateral offset input restriction structure includes a deformation accepting structure located between an load input part and a vehicle structural member to deform in response to the impact load imparted by the passenger's knee during the collision and a pair of load transmitting support members located between the load input part and the vehicle structural member, and arranged near both laterally facing sides of the deformation accepting structure to contact the deformation accepting structure to restrict lateral movement of the deformation accepting structure and the load transmitting member in response to the impact load imparted by the passenger's knee during the collision.

In an embodiment, the load input part and the load transmitting support member are connected together with a deformation timing delay structure that is arranged to deform by collapsing laterally to delay deformation of the load transmitting support member from the impact load imparted by the passenger's knee during the collision.

In an embodiment, the load input part and the load transmitting support member are connected together by a lateral rotational restricting structure that is arranged to rotate laterally when a direction in which the impact load imparted by the passenger's knees impact is offset in a lateral direction to absorb lateral offset input from the load input part.

In an embodiment, the lateral offset input restriction structure includes a pair of deformation accepting structures located between a load input part and a vehicle structural member, and arranged to deform in response to the impact load imparted by the passenger's knees contacting an intermediate portion of each the deformation accepting structures.

In an embodiment, the vertical offset input absorption structure includes a rotational support structure connecting the lateral offset input restriction structure to a vehicle structural member with a prescribed reactive rotational force such that the lateral offset input restriction structure can swing against the prescribed reactive rotational force in response to the impact load imparted by the passenger's knee during the collision.

In an embodiment, the rotational support structure includes a rotational supporting member connecting the lateral offset input restriction structure to the vehicle structural member such the lateral offset input restriction structure is rotatable relative to the vehicle structural member and a rotational energy absorbing member located between the rotational supporting member and the vehicle structural member to absorb a relative movement force between the rotational supporting member and the vehicle structural member.

In an embodiment, the rotational supporting member and the structural member have non-circular shapes and the rotational energy absorbing member includes a load limiter arranged between the rotational supporting member and the vehicle structural member to absorb load changes that occur due to changes in a radial clearance existing between the rotational supporting member and the vehicle structural member.

In an embodiment, the rotational energy absorbing member includes a tapered section formed with the vehicle structural member, an axial direction movement structure arranged to move the rotational supporting member toward the tapered section such that the tapered section enters into the rotational supporting member when the rotational supporting member rotates relative to the vehicle structural member and a load limiter located between the rotational supporting member and the vehicle structural member to absorb load changes that occur due to changes in a radial clearance existing between the rotational supporting member and the vehicle structural member.

In an embodiment, the rotational energy absorbing member includes a load limiting spring connected between the rotational supporting member and the vehicle structural member to absorb load changes that occur when the rotational supporting member rotates relative to the vehicle structural member.

In an embodiment, the rotational energy absorbing member includes an axial direction movement structure arranged to move the rotational supporting member in an axial direction of a rotational axis of the rotational supporting member when the rotational supporting member rotates relative to the vehicle structural member and a load limiter connecting the rotational supporting member and the vehicle structural member together along the axial direction.

In an embodiment, the rotational energy absorbing member includes a load limiting plate connecting the rotational supporting member and the vehicle structural member together in a rotational direction to absorb load transitions that occur when the rotational supporting member rotates relative to the vehicle structural member.

In an embodiment, the vertical offset input absorption structure includes a rotational restricting connector connecting the lateral offset input restriction structure to a vehicle structural member such that the lateral offset input restriction structure can move vertically relative to the vehicle structural member while exerting a rotational resistance against a rotational load from the lateral offset input restriction structure.

In an embodiment, the rotational restricting connector includes a fastening bolt fixedly connecting a mounting flange of the lateral offset input restriction structure to the vehicle structural member, and a bolt hole with a vertical slit formed in the mounting flange with the vertical slit having a narrower width than a diameter of the fastening bolt located in the bolt hole.

According to a further aspect of the invention there is provided a vehicle equipped with an impact energy absorbing knee bolster system as set out in the preceding paragraphs.

According to a still further aspect of the invention there is provided an impact energy absorbing knee bolster system comprising lateral offset input restriction means for restricting a lateral offset input component of an impact load imparted by a passenger's knee to a lateral direction and for promoting deformation during a collision and vertical offset input absorption means for absorbing a vertical offset input component of the impact load imparted by the passenger's knee and for promoting deformation during the collision.

According to another aspect of the invention there is provided a method for absorbing impact energy to a vehicle passenger comprising restricting a lateral offset input component of an impact load imparted by a passenger's knee against a knee bolster to lateral direction while promoting deformation of the knee bolster during a collision and absorbing a vertical offset input component of the impact load imparted by the passenger's knee against the knee bolster while promoting deformation of the knee bolster during the collision.

In embodiments of the invention, an impact energy absorbing knee bolster system is provided that includes a lateral offset input restriction structure and a vertical offset input absorption structure. The lateral offset input restriction structure is arranged to restrict a lateral offset input component of an impact load imparted by a passenger's knee in a laterally offset direction and to promote deformation during a collision. The vertical offset input absorption structure is arranged to absorb a vertical offset input component of the impact load imparted by the passenger's knee and to promote deformation during the collision.

Within the scope of this application it is envisaged that the various aspects, embodiments, examples, features and alternatives set out in the preceding paragraphs, in the claims and/or in the following description may be taken individually or in any combination thereof.

The present invention will now be described, by way of example only, with reference to the accompanying drawings in which:
Figure 1 is a simplified cross sectional view of a front section of a vehicle passenger compartment equipped with an impact energy absorbing knee bolster system in accordance with a first embodiment of the present invention is provided;
Figure 2 is a perspective view illustrating the mounting of the impact energy absorbing knee bolster system in accordance with the first embodiment of the present invention;
Figure 3 is an exploded perspective view of the knee bolster in accordance with the first embodiment of the present invention;
Figures 4(a) and 4(b) illustrate in a sequential manner the behavior of the lateral offset input restriction structure in the first embodiment of the present invention;
Figures 5(a) and 5(b) are simplified cross sectional views taken along the section line 4-4 of Figure 4(a) and illustrate in a sequential manner the relationship between a displacement part and a receiving part of a lateral offset input restriction structure in accordance with the first embodiment of the present invention;
Figure 6 illustrates the behavior of the a vertical offset input absorption structure in accordance with the first embodiment of the present invention;
Figures 7(a), 7(b) and 7(c) are simplified cross sectional views illustrating the behavior of a rotational support structure of a vertical offset input absorption structure in accordance with the first embodiment of the present invention;
Figure 8 is simplified cross sectional view of a load limiter in accordance with the first embodiment of the present invention;
Figure 9 is a perspective view illustrating the mounting of the impact energy absorbing knee bolster system in accordance with a second embodiment of the present invention;
Figure 10 is an exploded perspective view of the knee bolster in accordance with the second embodiment of the present invention;
Figures 11 (a) and 11 (b) are simplified cross sectional views illustrating in a sequential manner the behavior of the lateral offset input restriction structure in the second embodiment of the present invention;
Figure 12 is a perspective view illustrating the mounting of an impact energy absorbing knee bolster system in accordance with a third embodiment of the present invention;
Figure 13 is an exploded perspective view of the knee bolster in accordance with the third embodiment of the present invention;
Figures 14(a) and 14(b) are simplified views that illustrate in a sequential manner the operating state of the rotational support structure when a knee bolster in accordance with the third embodiment of the present invention receives an impact load;
Figure 15 is a perspective view illustrating the mounting of an impact energy absorbing knee bolster system in accordance with a fourth embodiment of the present invention;
Figure 16 is an exploded perspective view of the knee bolster in accordance with the fourth embodiment of the present invention;
Figures 17(a) and 17(b) are simplified views that illustrate in a sequential manner the operating state of the rotational support structure when a knee bolster in accordance with the fourth embodiment of the present invention receives an impact load;
Figure 18 is a perspective view illustrating the mounting of an impact energy absorbing knee bolster system in accordance with a fifth embodiment of the present invention;
Figure 19 is an exploded perspective view of the knee bolster in accordance with the fifth embodiment of the present invention;
Figures 20(a) and 20(b) are simplified views that illustrate in a sequential manner the operating state of the rotational support structure when a knee bolster in accordance with the fifth embodiment of the present invention receives an impact load;
Figure 21 is a perspective view illustrating the mounting of an impact energy absorbing knee bolster system in accordance with a sixth embodiment of the present invention;
Figure 22 is an exploded perspective view of the rotational energy absorbing member in the sixth embodiment of the present invention;
Figure 23 is a perspective view illustrating the mounting of an impact energy absorbing knee bolster system in accordance with a seventh embodiment of the present invention;
Figure 24 is an exploded perspective view of the knee bolster in accordance with the second embodiment of the present invention;
Figures 25(a) and 25(b) are simplified cross sectional views illustrating in a sequential manner the behavior of the lateral offset input restriction structure in the seventh embodiment of the present invention;
Figures 26(a) and 26(b) are simplified plan views illustrating in a sequential manner the behavior of the lateral offset input restriction structure in the seventh embodiment of the present invention;
Figure 27 is a perspective view illustrating the mounting of an impact energy absorbing knee bolster system in accordance with an eighth embodiment of the present invention;
Figure 28 is an exploded perspective view of the knee bolster in accordance with the eighth embodiment of the present invention;
Figure 29 is a perspective view of the vertical offset input absorption structure in the eighth embodiment of the present invention;
Figures 30(a) and 30(b) are simplified cross sectional views illustrating in a sequential manner the behavior of the lateral offset input restriction structure in the eighth embodiment of the present invention;
Figures 31 (a) and 31 (b) are simplified cross sectional views taken along the section line B-B of Figure 30 and illustrate in a sequential manner the behavior of the lateral offset input restriction structure in the eighth embodiment of the present invention;
Figure 32 is a perspective view illustrating the mounting of an impact energy absorbing knee bolster system in accordance with a ninth embodiment of the present invention;
Figure 33 is an exploded perspective view of a lateral rotational restricting structure in accordance with the ninth embodiment of the present invention;
Figures 34(a) and 34(b) are simplified plan views illustrating in a sequential manner the behavior of the lateral rotational restricting structure in the ninth embodiment of the present invention;
Figure 35 is a perspective view illustrating the mounting of an impact energy absorbing knee bolster system in accordance with a tenth embodiment of the present invention; and
Figures 36(a) and 36(b) are simplified plan views illustrating in a sequential manner the behavior of the lateral offset input restriction structure in the tenth embodiment of the present invention.

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

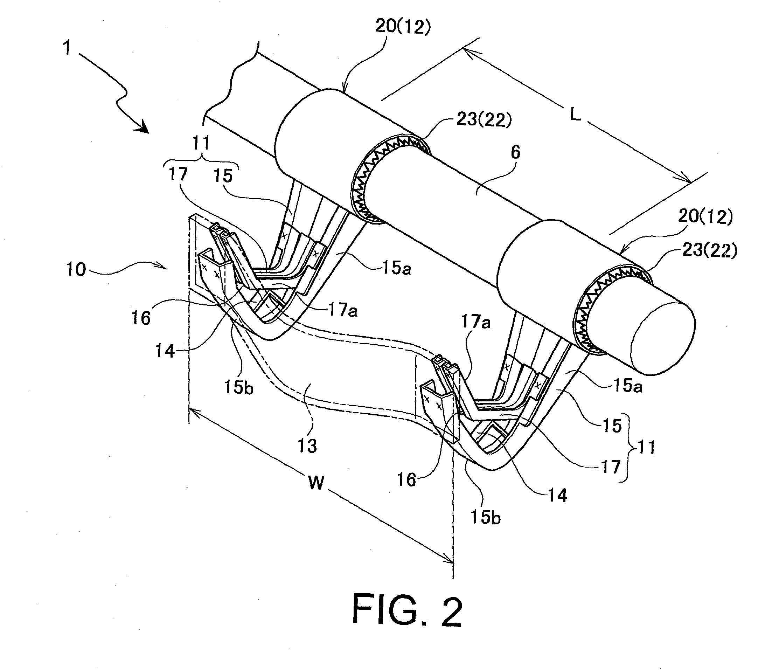

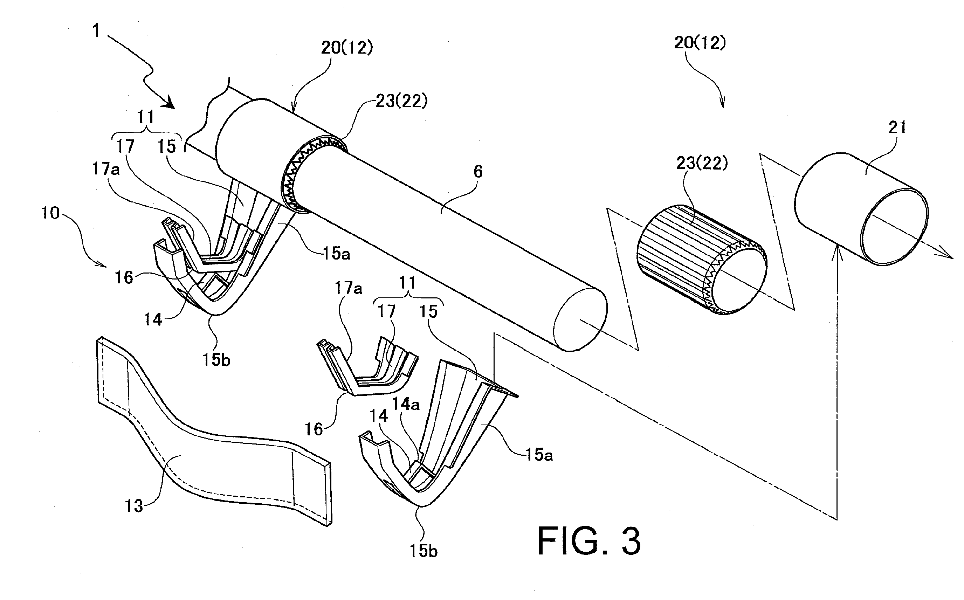

Referring initially to Figures 1 to 8, an impact energy absorbing knee bolster system 1 is illustrated in accordance with a first embodiment of the present invention. Figure 1 is a simplified cross sectional view of a front section of a passenger compartment in which the impact energy absorbing knee bolster system 1 is installed. Figure 2 is a perspective view illustrating how the impact energy absorbing knee bolster system 1 is mounted. Figure 3 is an exploded perspective view of the impact energy absorbing knee bolster system 1.

As shown in Figure 1, in this illustrated embodiment, the impact energy absorbing knee bolster system 1 absorbs the impact energy from the legs of a driver D sitting in a driver's seat 2. An instrument panel 3 exists in front of the driver's seat 2 with a steering column 4 passes through the instrument panel 3. A steering wheel 5 is mounted to a rearward end of the steering column 4. The steering column 4 is supported on a steering member 6, which extends along the widthwise (lateral) direction of the vehicle inside the instrument panel 3. The steering member 6 serves as a vehicle structural member. An upper face of the instrument panel 3 is covered with a dash trim 7 and a lower face is covered with a lower trim 8.

As shown in Figures 1 to 3, the impact energy absorbing knee bolster system 1 basically includes a knee bolster 10 with a lateral offset input restriction structure 11 and a vertical offset input absorption structure 12 and a plate 13 serving as a load input part. The lower trim 8 covers the plate 13. In short, the knee bolster 10 is applied to a vehicle by being arranged in a lower section of the instrument panel 3 of the vehicle on the inside of the lower trim 8 so as to be positioned in front of the knees Dn of the passenger's legs. Thus, the lower trim 8 and the plate 13 receive an impact load when a passenger's knee Dn of the passenger D impacts the knee bolster 10. In this embodiment, the knee bolster 10 is arranged so as to face toward a passenger sitting in a front seat. The lateral offset input restriction structure 11 restricts a lateral input component (input component oriented in a widthwise direction of the vehicle) of the impact load that is imparted when a passenger's knee Dn of the passenger D impacts the knee bolster 10. The lateral offset input restriction structure 11 also promotes deformation of the knee bolster 10. As a result, the impact energy absorbing knee bolster system 1 can absorb the impact energy irrespective of variation in the lateral position (position in widthwise direction of vehicle) of the passenger's knee. The vertical offset input absorption structure 12 absorbs a vertical input component (input component oriented in a vertical direction of the vehicle) of the impact load that is imparted when a passenger's knee Dn of the passenger D impacts the knee bolster 10. The vertical offset input absorption structure 12 also promotes deformation of the knee bolster 10. As a result, the impact energy absorbing knee bolster system 1 can absorb the impact energy irrespective of variation in the vertical position of the passenger's knee.

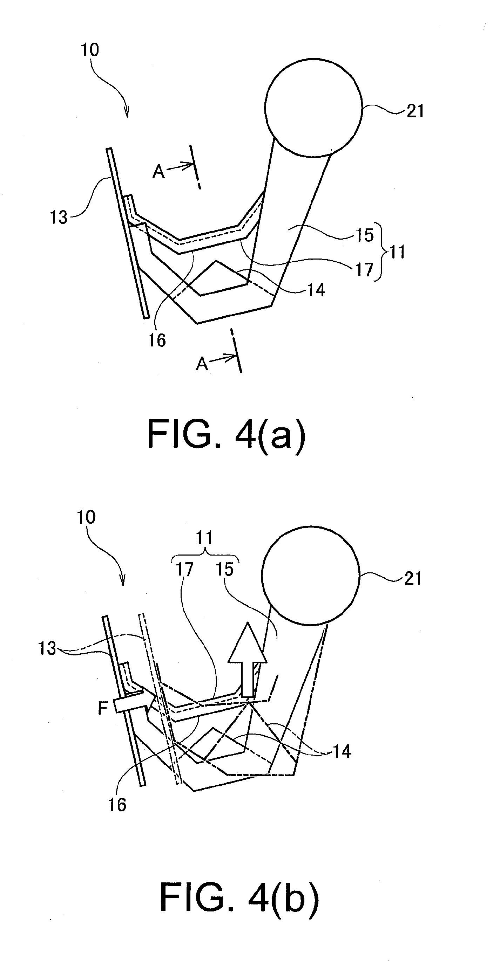

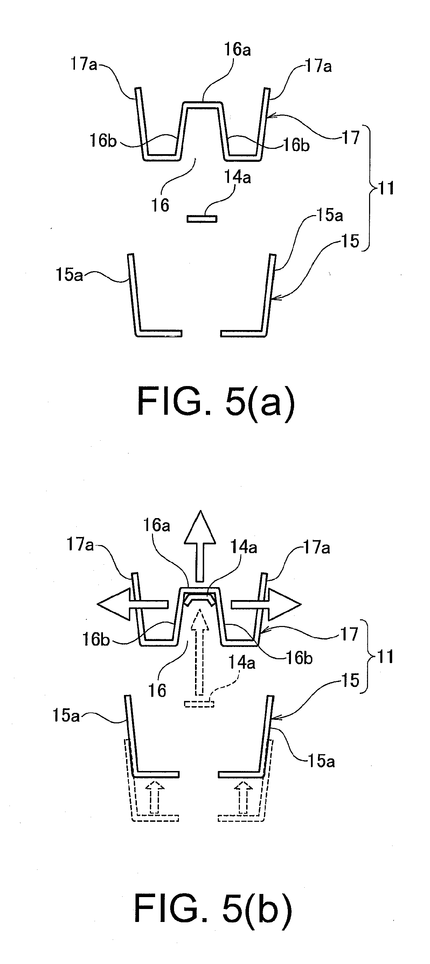

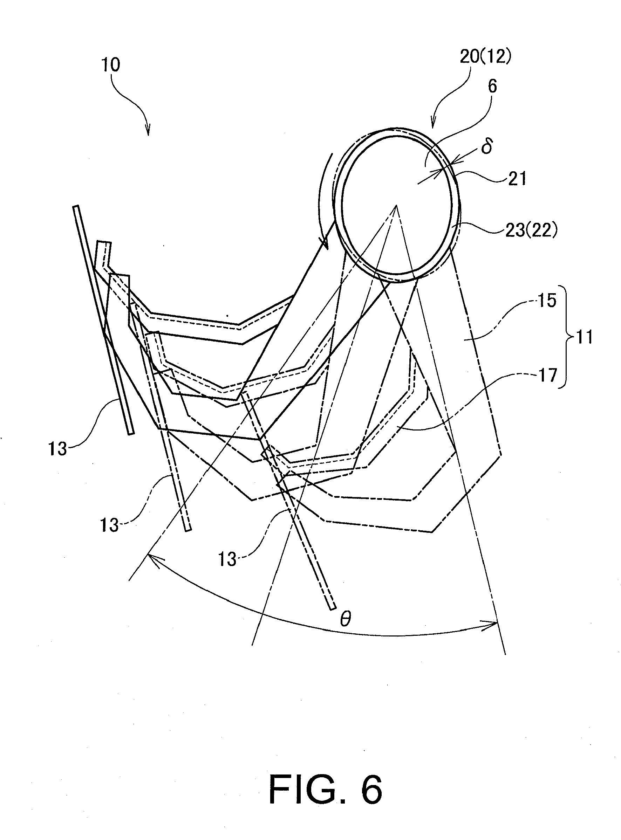

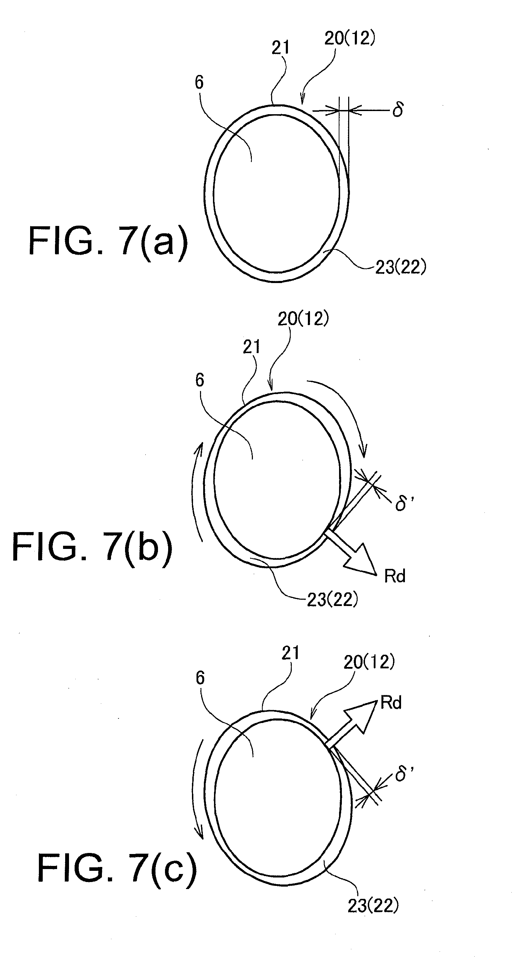

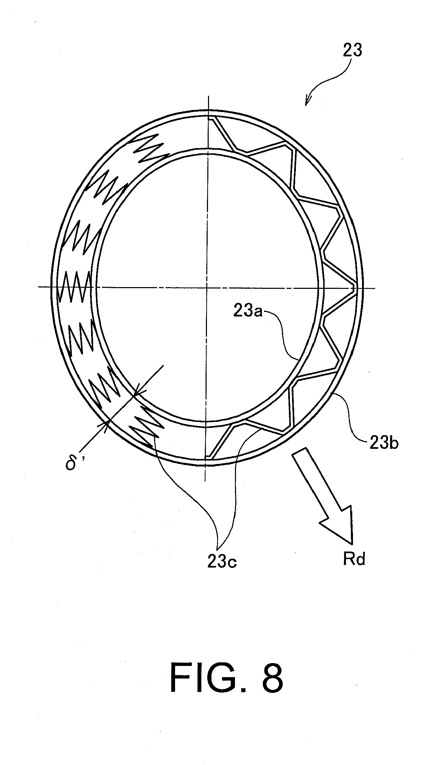

Figures 4(a) and 4(b) illustrate in a sequential manner the behavior of the lateral offset input restriction structure. Figures 5(a) and 5(b) are cross sectional views taken along the section line A-A of Figure 4 and illustrate in a sequential manner the relationship between a displacement part and a receiving part of the lateral offset input restriction structure. Figure 6 illustrates the behavior of the vertical offset input absorption structure. Figures 7(a), 7(b) and 7(c) are cross sectional views illustrating the behavior of a rotational support structure of the vertical offset input absorption structure. Figure 8 is a simplified cross sectional view of a load limiter.

A passenger leg protecting method in accordance with this embodiment promotes deformation of the knee bolster 10 while restricting the lateral input component of the impact that occurs when the knees Dn strike the knee bolster 10. Thus, the knee bolster 10 absorbs the impact energy irrespective of variation in the lateral positions of the passenger's knees Dn. Moreover, a passenger leg protecting method in accordance with this embodiment is contrived to promote deformation of the knee bolster 10 while absorbing the vertical input component of the impact that occurs when the knees Dn strike the knee bolster 10. Thus, the knee bolster 10 absorbs the impact energy irrespective of variation in the vertical positions of the passengers knees Dn.

As shown in Figure 2, there are two lateral offset input restriction structure 11 arranged with a prescribed widthwise spacing L in-between. Each of the lateral offset input restriction structures 11 includes a first arm 15 and a second arm 17. The first arm 15 is arranged so as to span between the steering member 6 and the plate 13 serving as a load input part configured and arranged to receive the impact load when the knees Dn impact the knee bolster 10. The first arm 15 serves as a deformation accepting structure configured to deform in both the vertical and longitudinal directions of the vehicle when an impact load is imparted to the knee bolster 10 by the passenger's knees Dn. The first arm 15 is provided with a displacement part that is displaced in the vertical and longitudinal directions when the deformation of the first arm 15 occurs. The second arm 17 is also arranged between the plate 13 and the steering member 6. The second arm 17 serves as a load transmitting support member. The second arm 17 is provided with a receiving part 16 that receives the displacement part 14 when the displacement part 14 becomes displaced due to the deformation. The receiving part 16 also restricts the movement of the displacement part 14 in the widthwise direction of the vehicle.

Each of the first arms 15 protrudes rearward from the steering member 6 with a generally V-shaped form. Both laterally facing sides of the first arms 15 are bent into standing edge sections 15a. The standing edge sections 15a serve to increase the strength of the first arm 15.

The displacement parts 14 are provided in the curved bottom sections 15b of the V-shaped first arms 15. The displacement parts 14 are each provided in a portion of the widthwise middle of the respective first arm 15 that has been cut and bent upward into an upwardly pointing chevron-like shape. The cut portion has a prescribed length and width. A tip end portion of each of the first arms 15 is fixed to an edge portion of the back side (side facing frontward) of the plate 13 by welding.

The second arms 17 are generally U-shaped members that are arranged above the first arms 15. An end portion of each of the second arms 17 is fitted into the base end (end nearer the steering member 6) of the first arm 15 and secured by welding. The other end of each of the second arms 17 is fixed by welding to an edge portion of the back side of the plate 13 at a position above the portion where the corresponding first arm 15 is welded.

Both laterally facing edges of the second arms 17 have been cut and bent upward to form standing edge sections 17a. The standing edge sections 17a serve to increase the strength of the second arms 17. A widthwise middle portion of each of the second arms 17 is formed into an upwardly protruding section that extends along the entire length of the arm 17. The upwardly protruding sections constitute the receiving parts 16. The receiving parts 16 open in the downward direction as shown in Figure 5 such that the displacement parts 14 will fit perfectly or nearly perfectly in the upper end portions of the receiving parts 16. The receiving parts can also serve to further increase the strength of the second arms 17.

The plate 13 has a prescribed width W and extends in the widthwise direction of the vehicle between the tip end portions of the pairs of left and right first and second arms 15 and 17.

The vertical offset input absorption structure 12 has a rotational support structure 20 that serves to attach the lateral offset input restriction structure 11 to the steering member 6 such that they can swing vertically against a prescribed reactive rotational force. Each of the rotational support structures 20 has an arm guide 21 and a rotational energy absorbing member 22. The arm guide 21 serves as a rotational supporting member that couples the respective lateral offset input restriction structure 11 to the steering member 6 such that the lateral offset input restriction structure 11 can rotate relative to the steering member 6. The rotational energy absorbing member 22 is provided between the arm guide 21 and the steering member 6. The rotational energy absorbing member 22 serves to absorb a relative movement force between the arm guide 21 and the steering member 6.

The arm guides 21 are cylindrical as shown in Figure 3. The base end of the respective first arm 15 is fixed to the outside of each arm guide 21 by welding. The arm guides 21 are press fitted onto the steering member 6 with the rotational energy absorbing member 22 disposed in-between. In this way, as shown in Figure 1, the first arms 15 and second arms 17 are supported so as to protrude downward and rearward from the steering member 6.

As shown in Figure 6, each of the rotational energy absorbing members 22 has an elliptical shape (non-circular cross sectional shape) formed in the arm guide 21 and on the steering member 6. Each of the rotational energy absorbing members 22 also includes a load limiter 23 that is arranged between the arm guide 21 and the steering member 6. The load limiter 23 serves to absorb load changes that occur due to changes in a radial gap or clearance δ between the arm guide 21 and the steering member 6.

As shown in Figure 8, the load limiter 23 has an inner ring 23a and an outer ring 23b with a thin-walled spring 23c disposed therebetween. When the radial gap δ between the inner ring 23a and the outer ring 23b changes, the portions of the spring 23c where the gap δ decreases are compressed and generate a reaction load Rd.

More specifically, as shown in Figure 7(a), the arm guide 21 and the steering member 6 are formed to have substantially matching elliptical shapes such that the gap δ there-between is substantially constant around the entire circumference thereof. The load limiter 23 is installed in the gap δ between the arm guide 21 and the steering member 6. As shown in Figures 7(b) and 7(c), when the arm guide 21 rotates with respect to the steering member 6 in either direction, the gap δ changes and the load limiter 23 is compressed in the places where the gap δ decreases. The reaction force Rd of the load limiter 23 increases at the compressed portions and the energy of the relative rotation between the arm guide 21 and the steering member 6, i.e., the energy of the impact load F, is absorbed.

With a knee bolster 10 in accordance with the first embodiment, when a frontal collision, a frontal offset collision, or a frontal diagonal collision occurs, the passenger D moves toward the front of the vehicle due to an inertia force and the knees Dn of the passenger D strike against the front trim 8. As shown in Figure 4, the resulting impact load F is imparted to the plate 13 of the knee bolster 10. While the V-shaped first arms 15 deform such a direction that the V-shaped portions thereof close from the curved bottom sections 15b, the chevron-shaped displacement parts 14 deform in the closing direction such that the apexes 14a thereof are lifted toward the second arms 17. As shown in Figure 5(b), the apexes 14a of the displacement parts 14 enter into the receiving parts 16 of the second arms 17 such that the apexes 14b of the displacement parts 14 are received inside the receiving parts 16.

The impact load F can be controlled more effectively because the deformation of the first arms 15 can be restrained by the contact of the apexes 14a against the roof surfaces 16a of the receiving parts 16, and the deformation forces acting against the first arms 15 in the widthwise direction of the vehicle (lateral direction) can be restricted by the contact of the deformation parts 14 against the side walls 16b of the receiving parts 16. In other words, if the passenger D is sitting diagonally or when a frontal offset collision or a frontal diagonal collision occurs such that the collision load includes a lateral component, the knees Dn of the passenger D will impact the plate 13 from a diagonal direction and the lateral load component of the impact load will cause the displacement parts 14 to touch against the side walls 16b of the receiving parts 16.

As mentioned above, the knee bolster 10 of this embodiment has the lateral offset input restriction structure 11 comprising the first arms 15 with the displacement parts 14 and the second arms 17 with the receiving parts 16, the deformation of the knee bolster 10, i.e., the deformation of the first arms 15. Thus, with this structure, the deformation of the knee bolster 10, i.e., the deformation of the first arms 15, can be promoted while restricting the lateral input component (input component oriented in a widthwise direction of the vehicle) of the impact load that is imparted when a knee Dn of the passenger D impacts the knee bolster 10. As a result, the knee bolster 10 can absorb the impact energy irrespective of variation in the lateral positions (positions in the widthwise direction of the vehicle) of the passenger's knees Dn. When the impact load F is imparted to the plate 13, the first arms 15 and the second arms 17 swing as shown in Figure 6 due to the relative rotation of the arm guides 21 about the steering member 6. At the same time, the gap δ between the arm guides 21 and the steering member 6 changes as shown in Figure 7(c) and a reaction load Rd develops in the load limiters 23, thereby enabling the impact load F to be absorbed.

As mentioned above, the knee bolster 10 of with this embodiment has the vertical offset input absorption structure 12, i.e., the rotational support structure 20 with the arm guides 21 and the load limiters 23 constituting a rotational energy absorbing member 22. Thus, with this structure, when the physique of the passenger D is such that the passenger's knees Dn are offset vertically with respect to the knee bolster 10, the vertical input component of the impact can be absorbed while promoting deformation of the knee bolster 10, i.e., of the load limiters 23. As a result, the knee bolster 10 can absorb the impact energy irrespective of variation in the vertical position of the passenger's knees Dn.

In short, the impact energy can be absorbed in an efficient manner even when the direction in which a knee Dn of the passenger D impacts the knee bolster 10 is offset in both the lateral (widthwise) and vertical directions.

In this embodiment, each of the lateral offset input restriction structures 11 includes the first arm 15 with the displacement part 14 and the second arm 17 with the receiving part 16. The impact load F with which the passenger's knees Dn impact the plate 13 when a collision occurs is efficiently absorbed by the deformation of the first arm 15, and the lateral input component of the impact load can be restricted easily by the fitting of the displacement part 14 into the receiving part 16. As a result, the structure of the lateral offset input restriction structure 11 can be simplified.

Although the embodiment presents a case in which the displacement part 14 moves upward into the receiving part 16 when the first arm 15 deforms, the present invention is not limited to such an arrangement. It is also possible to adjust the manner in which the first arm 15 deforms or otherwise change the configuration of the seat bolster such that the displacement part 14 is displaced downward, frontward, or rearward. Any of these displacement directions is acceptable so long as the receiving part 16 of the second arm 17 is arranged so as to receive the displacement part 14 and restrict lateral offset input during a collision.

In this embodiment, each of the vertical offset input absorption structures 12 includes the rotational support structure 20 that couples the lateral offset input restriction structure 11, i.e., the first and second arms 15 and 17, to the steering member 6 such that the first and second arms 15 and 17 can swing vertically against a prescribed reactive rotational force (e.g., a rotational elastic resistance force). As a result, the swinging force of the first and second arms 15 and 17 can be absorbed by the rotational elastic resistance force of the rotational support structure 20 and the structure of the vertical offset input absorption structure 12 can be simplified.

In this embodiment, each of the rotational support structures 20 includes the arm guide 21 and the rotational energy absorbing member 22. The arm guide 21 is coupled to the lateral offset input restriction structure 11, i.e., the first and second arms 15 and 17. Also each of the rotational support structures 20 fits rotatably onto the steering member 6. The rotational energy absorbing member 22 is arranged between the arm guide 21 and the steering member 6 and serves to absorb the relative movement force between arm guide 21 and the steering member 6. Since the rotational support structure 20 can be constructed by fitting the arm guide 21 onto the steering member 6 with the rotational energy absorbing member 22 therebetween, the structure of the rotational support structure 20 can be simplified and the rotational support structure 20 can be assembled more easily.

In this embodiment, each of the rotational energy absorbing members 22 are formed such that the arm guide 21 and the steering member 6 have elliptical cross sections. Also each of the rotational energy absorbing members 22 includes a load limiter 23 that is inserted between the arm guide 21 and the steering member 6 and serves to absorb load changes occurring due to changes in the radial gap δ between the arm guide 21 and the steering member 6. Thus, since the load limiter 23 generates a reaction load Rd when relation rotation occurs between the arm guide 21 and the steering member 6, the swing amount of the first and second arms 15 and 17 can be converted into the reaction load Rd in a precise manner and the impact energy can be absorbed efficiently because vertical offset input of the impact direction resulting from the vertical position of the passenger's knees Dn can be permitted in a reliable fashion.

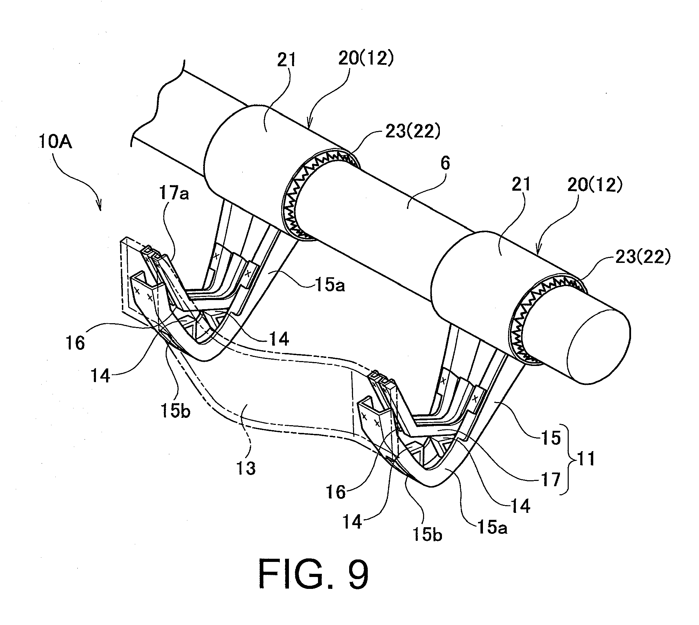

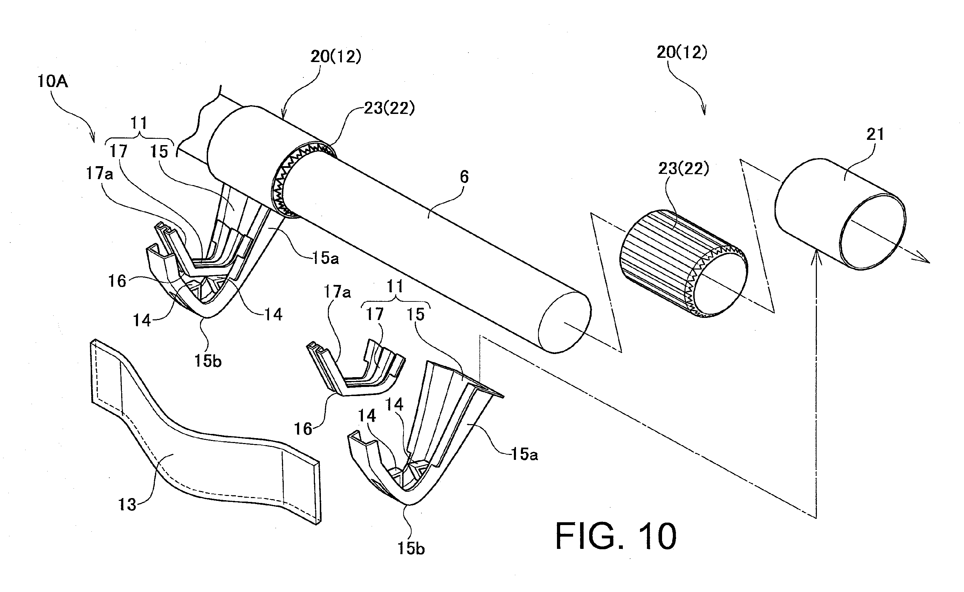

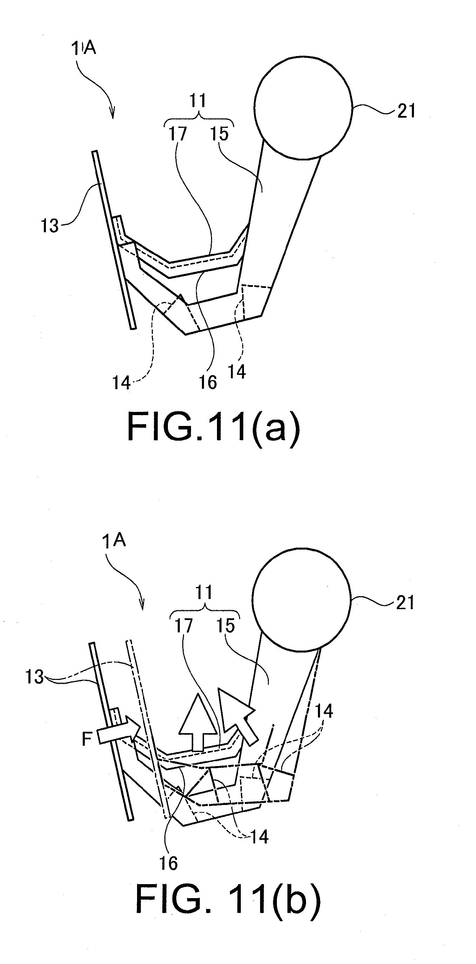

Figures 9 to 11 show a knee bolster 10A in accordance with a second embodiment of the present invention. Parts of the second embodiment that are the same as the parts of the first embodiment are indicated with the same reference numerals and explanations thereof are omitted for the sake of brevity. Figure 9 is a perspective view showing how the knee bolster 10A is mounted. Figure 10 is an exploded perspective view of the knee bolster. Figures 11 (a) and 11 (b) are cross sectional views illustrating in a sequential manner the behavior of the lateral offset input restriction structure.

As shown in Figures 9 and 10, the knee bolster 10A of this embodiment is basically the same as the first embodiment in that it has two of the lateral offset input restriction structures 11 and two of the vertical offset input absorption structures 12. Also, in this embodiment, each of the lateral offset input restriction structures 11 includes the first arm 15 with the displacement part 14 and the second arm 17 with the receiving member 16. The first arm 15 is arranged to span between the plate 13 and the steering member 6. The second arm 17 is arranged to span between the plate 13 and the steering member 6.

The difference between this embodiment and the first embodiment is that each of the first arms 15 is provided with a plurality of the displacement parts 14 (two in this embodiment) arranged laterally. The displacement parts 14 are provided at front and rear corner portions of the curved bottom section 15b of the first arm 15. The displacement parts 14 are bent so that they are generally V-shaped. Each of the displacement parts 14 includes a portion of the widthwise middle of the first arm 15 that has been cut to a prescribed length and width and bent upward into an upwardly pointing chevron-like shape.

Thus, as shown in Figure 11, when a frontal collision occurs and an impact load F is imparted to the knee bolster 10A, each of the first arms 15 deforms at the front and rear corner portions of the curved bottom section 15b and the apexes 14a of the displacement parts 14 move into the receiving part 16 of the corresponding one of the second arms 17. Since there are two (more than one) displacement parts 14, the deformation of the first arm 15 can be restrained in a more reliable manner than first embodiment when the apexes 14a contact the roof surface 16a of the receiving part 16 and the effect of controlling the impact load F can be enhanced. Additionally, the lateral deformation force of the first arms 15 can be restricted more reliably than the first embodiment by the contact of the displacement parts 14 against the side wall 16b of the receiving part 16.

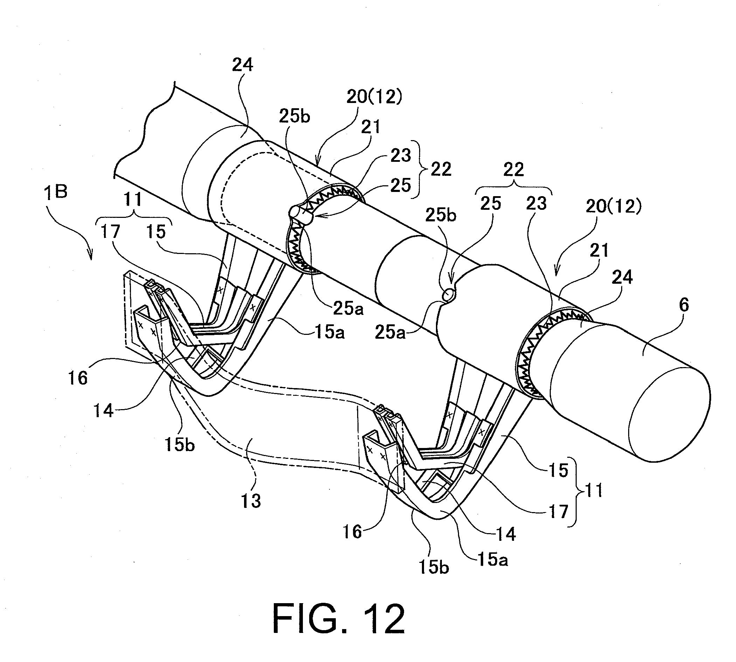

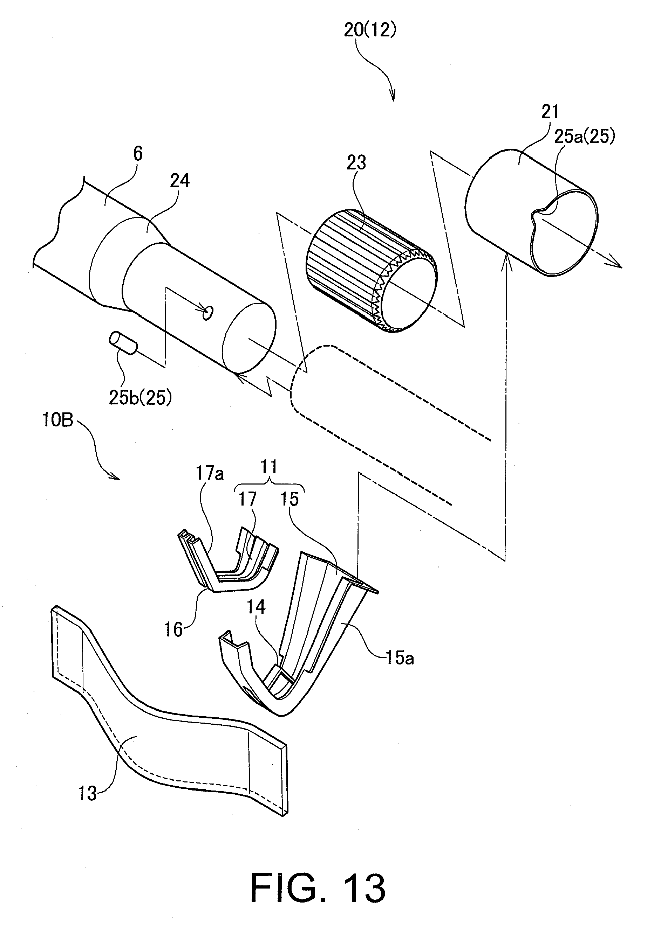

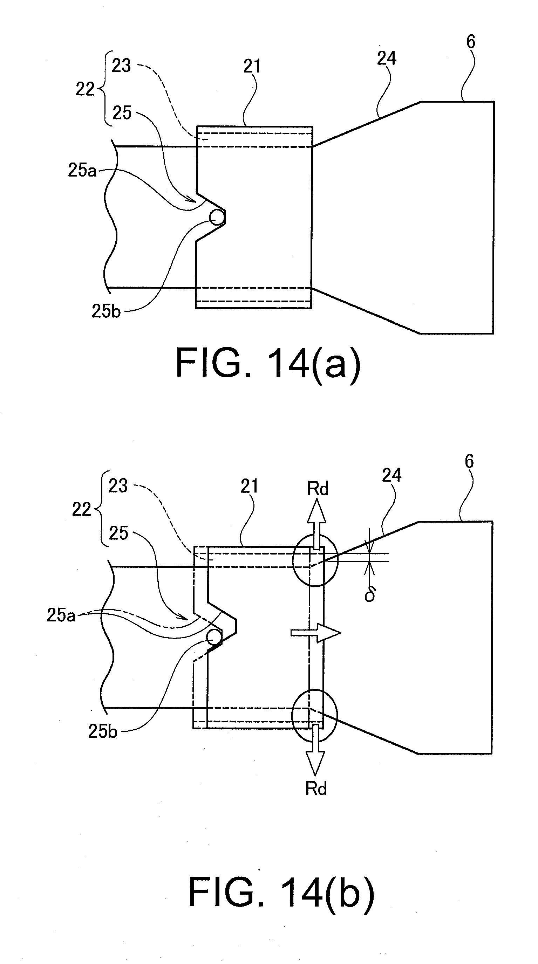

Figures 12 to 14 show a knee bolster 10B in accordance with a third embodiment of the present invention. Parts of the third embodiment that are the same as the parts of the first embodiment are indicated with the same reference numerals and explanations thereof are omitted for the sake of brevity. Figure 12 is a perspective view showing how the knee bolster 10B is mounted. Figure 13 is an exploded perspective view of the knee bolster. Figures 14(a) and 14(b) illustrate in a sequential manner the operating state of the rotational support structure when an impact load is imparted to the knee bolster 10B.

As shown in Figure 12, the knee bolster 10B of this embodiment is basically the same as the first embodiment in that it has two of the lateral offset input restriction structures 11 and two of the vertical offset input absorption structures 12. Each of the vertical offset input absorption structures 12 includes the rotational support structures 20 serving to attach the corresponding lateral offset input restriction structures 11 to the steering member 6 such that it can swing vertically against a prescribed reactive rotational force. Also similarly, each of the rotational support structures 20 includes the arm guide 21 and the rotational energy absorbing member 22. The arm guides 21 are coupled to the corresponding one of the lateral offset input restriction structures 11 and fit rotatably onto the steering member 6. The rotational energy absorbing members 22 are arranged between the arm guides 21 and the steering member 6 to absorb the relative movement force between the arm guides 21 and the steering member 6.

Meanwhile, differently from the first embodiment, the cross sectional shapes of the steering member 6 and the arm guides 21 are circular and the arm guides 21 are fitted onto the steering member 6 together with the load limiter 23 such that the arm guides 21 can both rotate and move axially with respect to the steering member 6.

Furthermore, in this embodiment, each of the rotational energy absorbing members 22 includes the load limiter 23 of the first embodiment as well as a tapered section 24 and an axial direction movement structure 25. The tapered sections 24 are formed on the steering member 6. The axial direction movement structures 25 move the arm guides 21 toward the tapered section 24 such that the tapered sections 24 enter into the arm guides 21 when the arm guide s21 rotate relative to the steering member 6. The load limiters 23 (see the first embodiment) are disposed between the arm guides 21 and the steering member 6 to absorb load changes that occur due to changes in a radial gap between the arm guides 21 and the steering member 6.

The tapered sections 24 are located adjacently on one side of each of the arm guides 21 (the opposite side as the side facing the other arm guide 21) such that one side of the internal circumference of the corresponding load limiter 23 contacts the tapered section 24.

As shown in Figure 13, the axial direction movement structure 25 of each of the rotational energy absorbing members 22 includes a V-shaped notch 25a and a guide pin 25b. The V-shaped notch 25a is formed in the other side of the cylindrical arm guide 21 (i.e., the side facing axially toward the other arm guide 21). The guide pin 25b is implanted in the steering member 6 and positioned at a bottom portion of the V-shaped notch 25a.

Thus, with the knee bolster 10B in accordance with this embodiment, when the passenger's knees Dn impart an impact load F to the plate 13 such that the first arms 15 and the second arms 17 swing about the steering member 6 with the arm guides 21, the axial direction movement structures 25 change from the state shown in Figure 14(a) in which the guide pins 25b are positioned at the bottoms of the V-shaped notches to the state shown in Figure 14(b) in which the guide pins 25b have moved along the slanted side faces of the V-shaped notches 25a due to the rotation of the arm guides 21. As a result, the arm guides 21 and the load limiters 23 are pushed toward the tapered sections 24. When this occurs, the gap δ between each of the tapered sections 24 of the steering member 6 and the side of each of the arm guides 21 that faces toward the tapered section 24 changes and the internal circumferences of the corresponding end portions of the load limiters 23 are pressed against the tapered sections 24. Reaction loads Rd develop at the portions where the internal circumferences of the load limiters 23 are pressed against the tapered sections 24 and the energy of the relative rotation between the arm guides 21 and the steering member 6, i.e., the energy of the impact load F, is absorbed. As a result, the impact energy can be absorbed irrespective of variation in the vertical position of the passenger's knees Dn.

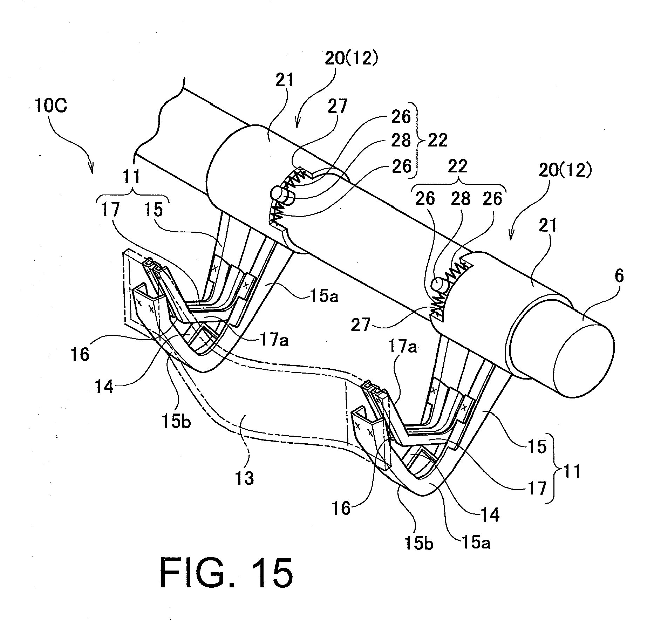

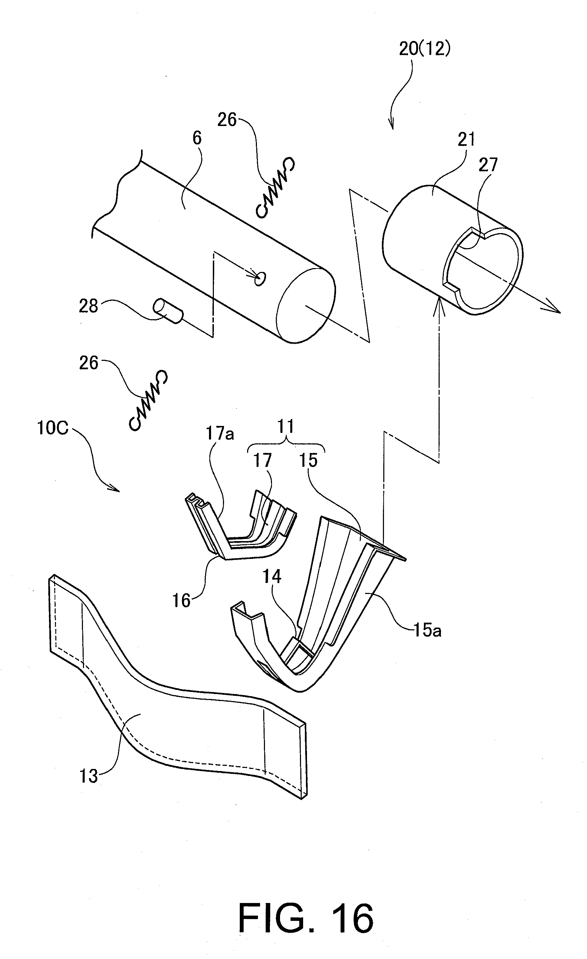

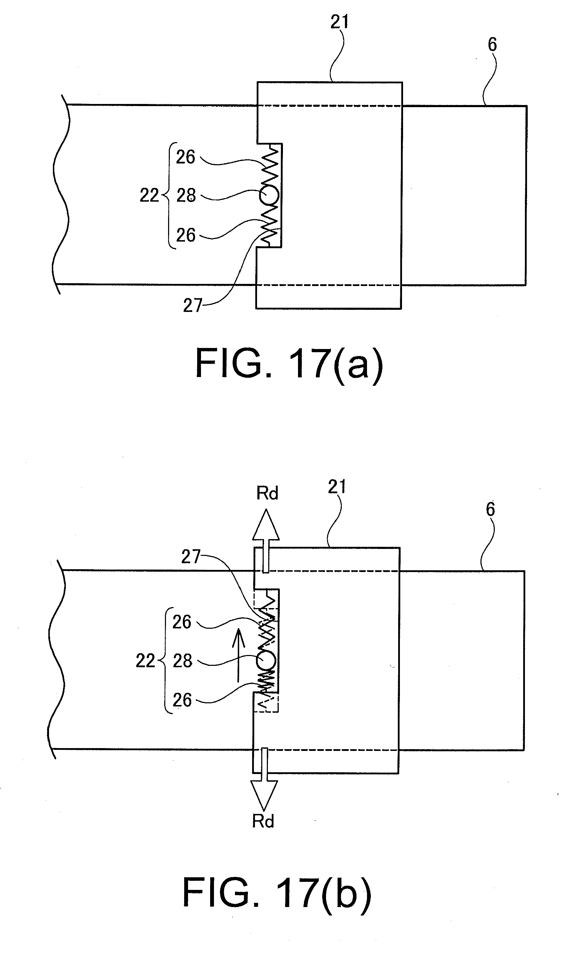

Figures 15 to 17 show a knee bolster 10C in accordance with a fourth embodiment of the present invention. Parts of the fourth embodiment that are the same as the parts of the first embodiment are indicated with the same reference numerals and explanations thereof are omitted for the sake of brevity. Figure 15 is a perspective view showing how the knee bolster 10C is mounted. Figure 16 is an exploded perspective view of the knee bolster 10C. Figures 17(a) and 17(b) illustrate in a sequential manner the operating state of the rotational support structure when an impact load is imparted to the knee bolster.

As shown in Figure 15, the knee bolster 10C of this embodiment is basically the same as the first embodiment in that it has two of the lateral offset input restriction structures 11 and two of the vertical offset input absorption structures 12. Each of the vertical offset input absorption structures 12 includes a rotational support structure 20 serving to attach the corresponding lateral offset input restriction structure 11 to the steering member 6 such that it can swing vertically against a prescribed reactive rotational force. Also similarly, each of the rotational support structures 20 includes an arm guide 21 and a rotational energy absorbing member 22. Meanwhile, differently from the first embodiment, the steering member 6 and the arm guides 21 both have circular cross sectional shapes and the arm guides 21 are fitted directly onto the steering member 6 such that they can rotate about the steering member 6. Furthermore, in this embodiment, each of the rotational energy absorbing members 22 includes two load limiting springs 26 that are arranged so as to connect the respective arm guide 21 and the steering member 6 together in the rotational direction and serve to absorb load changes that occur when the arm guide 21 rotates relative to the steering member 6.

As shown in Figure 16, a notch 27 having a prescribed circumferential length is formed in the side of each arm guide 21 that faces axially toward the other arm guide 21, and two stationary pins 28 are implanted into the steering member 6 in such positions that one stationary pin 28 is located at the circumferential middle of each of the notches 27.

Each pair of load limiting springs 26 is arranged such that one load limiting spring 26 is disposed between one circumferentially facing end 27a of the notch 27 and the stationary pin 28 and the other load limiting spring 26 is disposed between the other circumferentially facing end 27b of the notch 27 and the stationary pin 28. Each of the load limiting springs 26 is arranged in a natural state with one end (i.e., the end facing the other spring 26) secured to the stationary pin 28 and the other end secured to the respective circumferentially facing end 27a or 27b of the notch 27.

Thus, with a knee bolster 10C in accordance with this embodiment, when the passenger's knees Dn impart an impact load F to the plate 13 such that the first arms 15 and second arms 17 swing about the steering member 6 with the arm guides 21, the spring forces of the two load limiting springs 26 of each of the rotational energy absorbing members 22 change from the balanced state shown in Figure 17(a) to the state shown in Figure 17(b), in which the arm guide 21 has rotated relative to the steering member 6 such that one of the load limiting springs 26 undergoes compressive deformation and the other load limiting spring 26 undergoes tensile deformation. As a result, both of the load limiting springs 26 generate a reaction load Rd in the compression direction and the tension direction.

Consequently, the energy of the relative rotation between the arm guides 21 and the steering member 6, i.e., the energy of the impact load F, is absorbed by the reaction loads Rd and the impact energy can be absorbed irrespective of variation in the vertical positions of the passengers knees Dn.

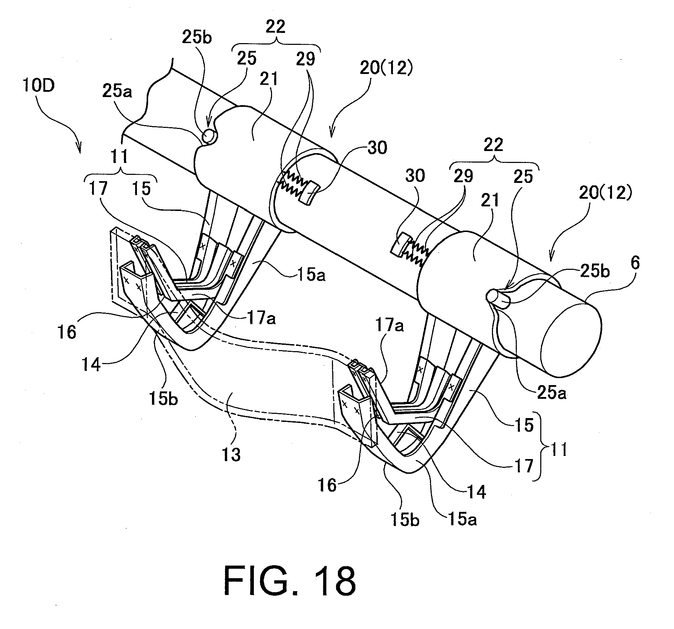

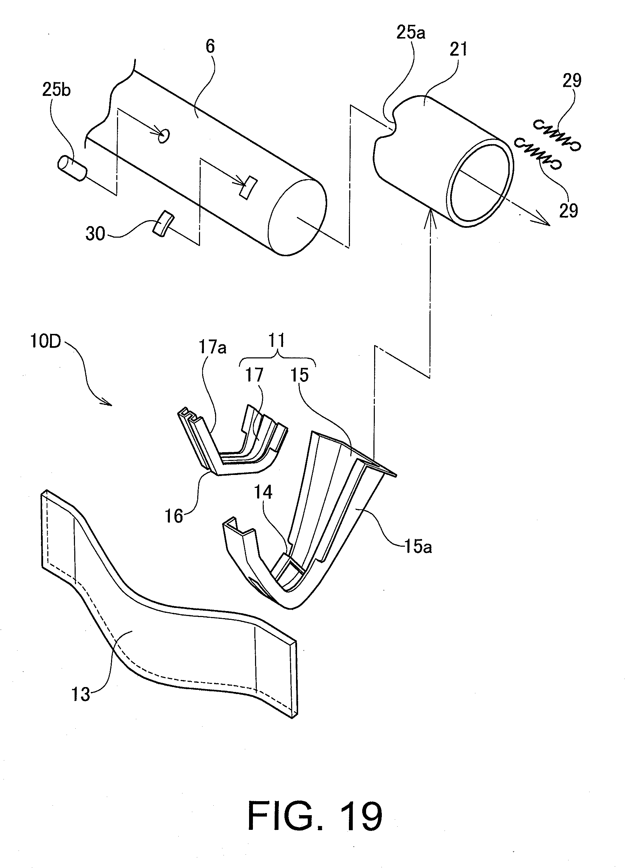

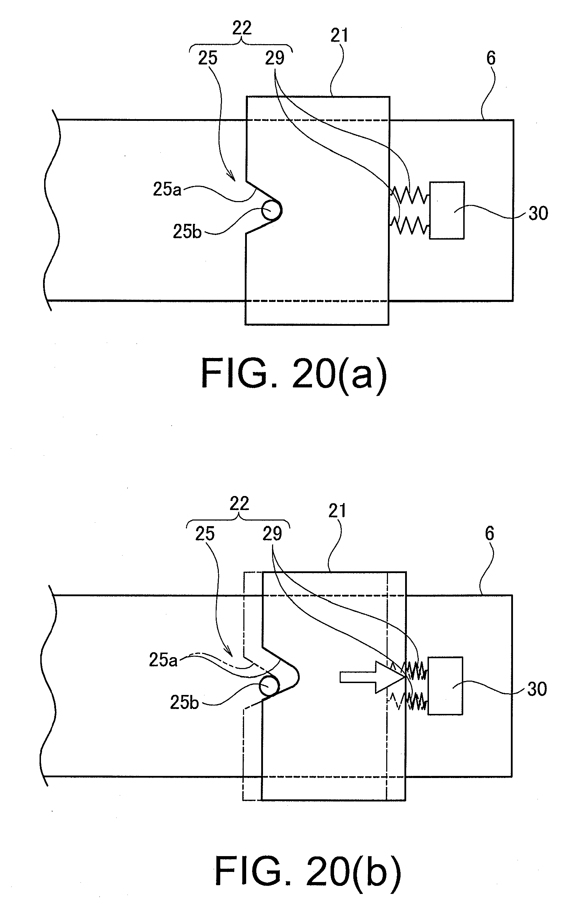

Figures 18 to 20 show a knee bolster 10D in accordance with a fifth embodiment of the present invention. Parts of the fifth embodiment that are the same as the parts of the first embodiment are indicated with the same reference numerals and explanations thereof are omitted for the sake of brevity. Figure 18 is a perspective view showing how the knee bolster 10D is mounted. Figure 19 is an exploded perspective view of the knee bolster 10D. Figures 20(a) and 20(b) illustrate in a sequential manner the operating state of the rotational support structure when an impact load is imparted to the knee bolster.

As shown in Figure 18, the knee bolster 10D of this embodiment is basically the same as the first embodiment in that it has two of the lateral offset input restriction structures 11 and two of the vertical offset input absorption structures 12. Each of the vertical offset input absorption structures 12 includes the rotational support structure 20 serving to attach the corresponding lateral offset input restriction structure 11 to the steering member 6 such that it can swing vertically against a prescribed reactive rotational force. Also similarly, each of the rotational support structures 20 includes the arm guide 21 and the rotational energy absorbing member 22.

Also, similarly to the fourth embodiment, the steering member 6 and the arm guides 21 both have circular cross sectional shapes and the arm guides 21 are fitted directly onto the steering member 6 such that they can rotate about the steering member 6.

In this embodiment, each of the rotational energy absorbing members 22 includes a pair of axial direction movement structures 25 and a pair of load limiting springs 29. The axial direction movement structures 25 move the arm guides 21 along the direction of a rotational axis when the arm guide 21 rotates relative to the steering member 6. The load limiting springs 29 connect the arm guides 21 and the steering member 6 together along the direction of the rotational axis.

As shown in Figure 19, each of the axial direction movement structures 25 includes the V-shaped notch 25a and the guide pin 25b, the same as in the fourth embodiment. However, in this embodiment, the axial direction movement structures 25 are provided on the opposite side of each arm guide 21 as in the fourth embodiment (i.e., the opposite side as the side facing toward the other arm guide 21).

Meanwhile, each pair of the load limiting springs 29 is provided on the other side of the corresponding arm guide 21 (i.e., the side facing axially toward the other arm guide 21). The load limiting springs 29 are arranged in a natural state so as to extend in the direction of the rotational axis, i.e., the lengthwise direction of the steering member 6, between the arm guide 21 and a stationary piece 30 implanted on the steering member 6 at a position separated by a prescribed distance from the other side of the respective arm guide 21. One end of each load limiting spring 29 is secured to the stationary piece 30 and the other end is secured to the other side of the arm guide 21. In this embodiment, each rotational energy absorbing members 22 is provided with a pair of (two) load limiting springs 29 arranged parallel to each other.

Thus, with a knee holder 10D in accordance with this embodiment, when the passenger's knees Dn impart an impact load F to the plate 13 such that the first arms 15 and second arms 17 swing about the steering member 6 with the arm guides 21, the axial direction movement structure 25 changes from the state shown in Figure 20(a) in which the guide pins 25b are positioned at the bottoms of the V-shaped notches and the load limiting springs 29 are in a natural state to the state shown in Figure 20(b) in which the guide pins 25b have moved along the slanted side faces of the V-shaped notches 25a due to the rotation of the arm guides 21 and the arm guides 21 have been pushed toward the stationary pieces 30.

Consequently, the load limiting springs 29 undergo compressive deformation and generate a reaction load Rd. The energy of the relative rotation between the arm guides 21 and the steering member 6, i.e., the energy of the impact load F, is absorbed by the reaction load Rd and the impact energy can be absorbed irrespective of variation in the vertical positions of the passengers knees Dn.

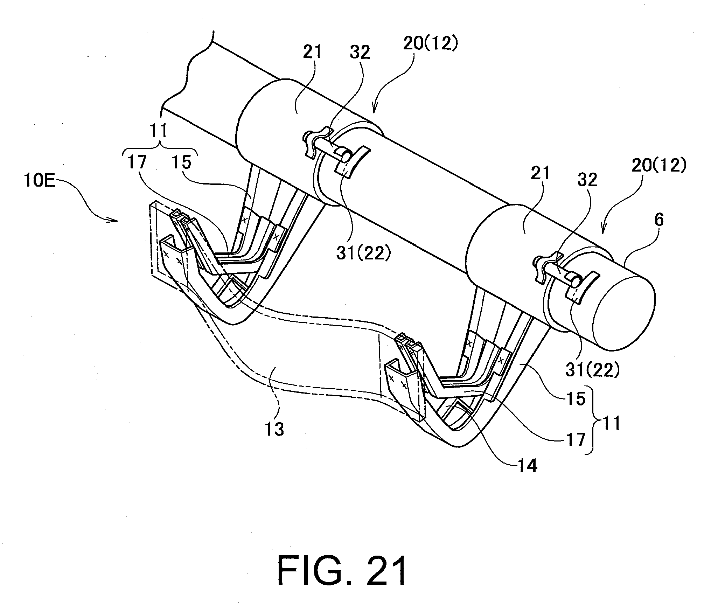

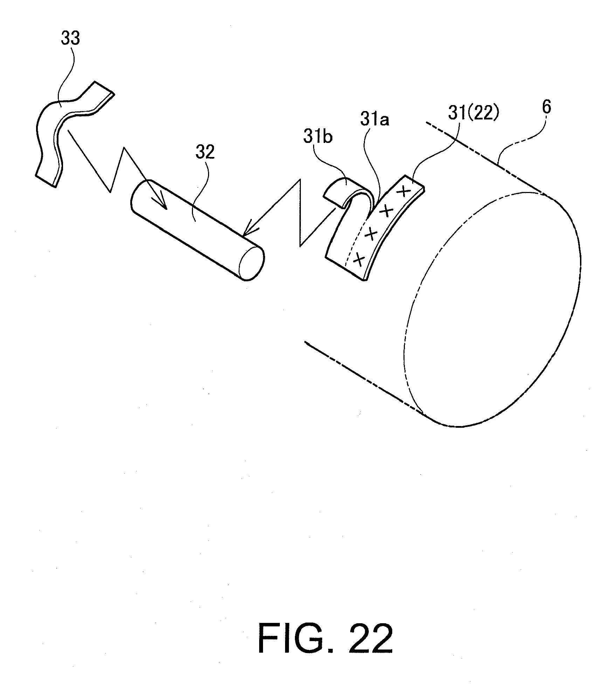

Figures 21 and 22 show a knee bolster 10E in accordance with a sixth embodiment of the present invention. Parts of the sixth embodiment that are the same as the parts of the first embodiment are indicated with the same reference numerals and explanations thereof are omitted for the sake of brevity. Figure 21 is a perspective view showing how the knee bolster is mounted, and Figure 22 is an exploded perspective view of the rotational energy absorbing member.

As shown in Figure 21, the knee bolster 10E of this embodiment is basically the same as the first embodiment in that it has two of the lateral offset input restriction structures 11 and two of the vertical offset input absorption structures 12. Each of the vertical offset input absorption structures 12 includes a rotational support structure 20 serving to attach the corresponding lateral offset input restriction structure 11 to the steering member 6 such that it can swing vertically against a prescribed rotational resistance. Also similarly, each of the rotational support structures 20 includes the arm guide 21 and the rotational energy absorbing member 22. Also, similarly to the fourth embodiment, the steering member 6 and the arm guides 21 both have circular cross sectional shapes and the arm guides 21 are fitted directly onto the steering member 6 such that they can rotate about the steering member 6.

In this embodiment, each of the rotational energy absorbing members 22 includes a load limiting plate 31 that is arranged so as to connect the respective arm guide 21 and the steering member 6 in the rotational direction and serves to absorb load changes that occur when the arm guide 21 rotates relative to the steering member 6. A laterally protruding load pin 32 is fixed to one side of each of the arm guides 21 (a side facing in a widthwise direction of the vehicle) fixed by a fastening plate 33.

Rectangular load limiting plates 31 are arranged on the steering member 6 adjacent to each of the fastening plates 33. Each of the load limiting plates 31 is provided with a cut 31a down the middle of an upper portion thereof and one side of the upper portion is curled so as to form a connecting piece 31 b. The terminal end of the connecting piece 31 b is welded to the end of the load pin 32 and the side of the load limiting plate 31 opposite the connecting piece 31 b is welded to the steering member 6.

Thus, with a knee bolster 10E in accordance with this embodiment, when the passenger's knees Dn impart an impact load to the plate 13 such that the first arms 15 and second arms 17 swing upward about the steering member 6 together with the arm guides 21, the load pins 32 cause the connecting pieces 31 b to deform in the direction of unraveling their curled shapes (uncurling direction), thereby generating a reaction load. Conversely, when the arm guides 21 turn in the downward direction, the load pins 32 cause the connecting pieces 31 b to deform in the curling direction and be torn off along the direction of an extension line of the cut 31 a, thereby generating a reaction load.

Consequently, the energy of the relative rotation between the arm guides 21 and the steering member 6, i.e., the energy of the impact load F, is absorbed by the reaction load and the impact energy can be absorbed irrespective of variation in the vertical positions of the passengers knees Dn.

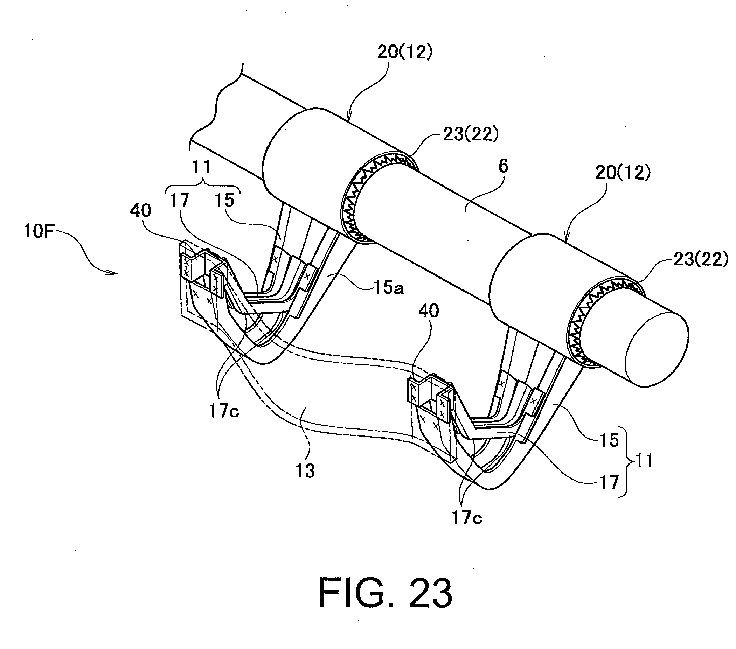

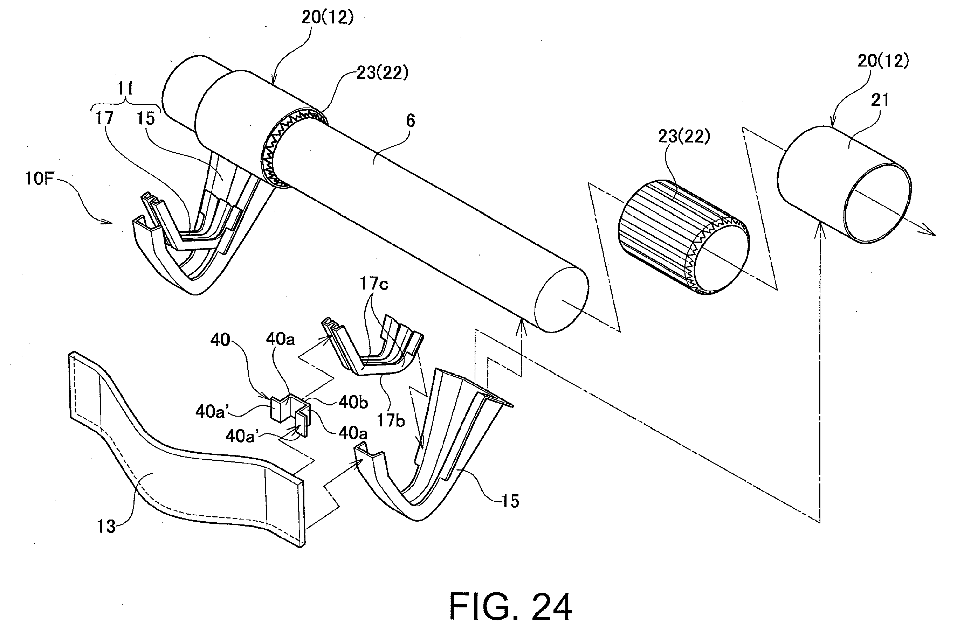

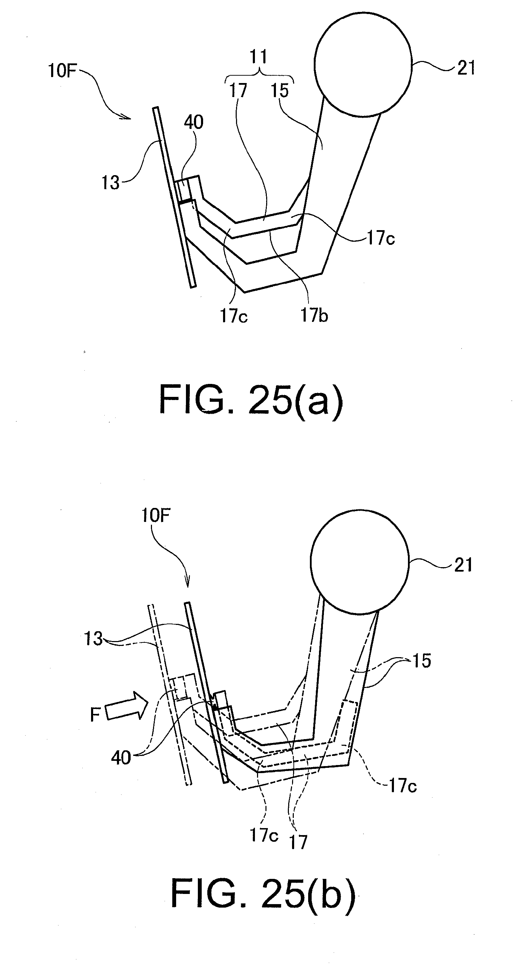

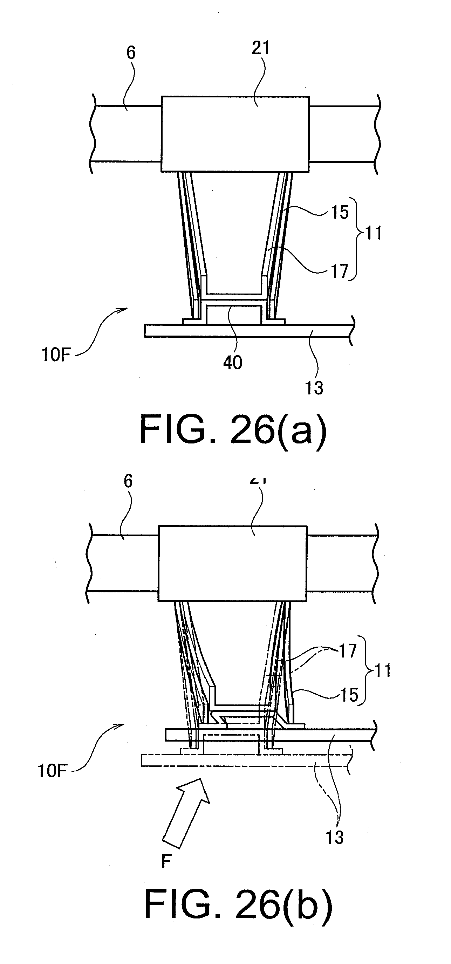

Figures 23 to 26 show a knee bolster 10F in accordance with a seventh embodiment of the present invention. Parts of the seventh embodiment that are the same as the parts of the first embodiment are indicated with the same reference numerals and explanations thereof are omitted for the sake of brevity. Figure 23 is a perspective view showing how the knee bolster is mounted. Figure 24 is an exploded perspective view of the knee bolster. Figures 25(a) and 25(b) are cross sectional views illustrating in a sequential manner the behavior of the lateral offset input restriction structure. Figures 26(a) and 26(b) are plan views illustrating in a sequential manner the behavior of the lateral offset input restriction structure.

As shown in Figures 23 and 24, the knee bolster 10F of this embodiment is basically the same as the first embodiment in that it has two of the lateral offset input restriction structures 11 and two of the vertical offset input absorption structures 12. Each of the lateral offset input restriction structures 11 includes the first arm 15 spanning between the plate 13 and the steering member 6 and the second arm 17 spanning between the plate 13 and the steering member 6. The second arm 17 fits together with the first arm 15 when the first arm 15 deforms and, thereby, restricts lateral movement of the first arm 15 and the second arm 17.

More specifically, the second arms 17 are basically the same as the second arms 17 of the first embodiment in that one end of each is fitted into the base end of the respective first arm 15 (end nearer the steering member 6) and welded into place and the other end is fixed to an edge portion of the back side of the plate 13 at a position above the portion where the corresponding first arm 15 is welded. However, differently from the first embodiment, the second arms 17 are arranged such that the two corner portions 17c at the front and rear of the bottom section 17b thereof are close to the respective first arms 15. As a result, when the first arms 15 deform vertically and laterally, the corner portions 17c of the second arms 17 fit into the corresponding first arm 15 such that the standing edge sections 15a and 17a can contact each other in the widthwise direction of the vehicle (lateral direction).

Also, in this embodiment, a deformation timing delay structure 40 is connected between each of the second arms 17 and the plate 13. The deformation timing delay structures 40 are configured to deform by collapsing laterally (in the widthwise direction of the vehicle) when the passenger's knees impact the knee bolster 10, thereby delaying the deformation of the second arms 17. The deformation timing delay structures 40 are configured to have lower strengths than the second arms 17. Each of the deformation timing delay structures 40 includes left and right side walls 40a and a peak wall 40b that connects the side walls 40a such that the deformation timing delay structures 40 are C-shaped in a plan view. The peak wall 40b of each deformation timing delay structure 40 is welded to the other end of the corresponding second arm 17 and flanges 40a' of the left and right side walls 40a are welded to an edge portion of the back side of the plate 13.

Thus, with a knee holder 10F in accordance with this embodiment, too, when a frontal collision occurs and an impact load F is imparted to the knee bolster 10F, the first arms 15 deform vertically and laterally in such a direction that the V-shaped portions thereof close from the curved bottom sections 15b as shown in Figure 25. The deformation of the first arms 15 causes the front and rear corner portions 17c of the bottom sections 17b of the second arms 17 to fit into the first arms 15. As the first and second arms 15 and 17 deform, the standing edge sections 15a and 17a contact each other in the widthwise direction of the vehicle and the resulting contact forces (resistance forces) serve to suppress deformation of the first arms 15. As a result, the effect of controlling the impact load F is enhanced and deformation forces acting to deform the first arms 15 in the lateral direction (widthwise direction of the vehicle) are restricted.

Since the deformation timing delay structures 40 undergo collapsing deformation before the second arms 17 deform, thereby delaying the deformation of the second arms 17, the front and rear corner portions 17c of each of the second arms 17 can enter into and fit together with the corresponding first arm 15 in an appropriate manner.

In particular, if the passenger D is sitting diagonally or if a frontal offset collision or a frontal diagonal collision occurs such that the collision load includes a lateral component, the knees Dn of the passenger D will impact the plate 13 from a diagonal direction as shown in Figure 26. Since the lateral load component of the impact load will cause the deformation timing delay structures 40 to undergo lateral collapsing deformation, the corner portions 17c of the second arms 17 will enter into and fit together with the first arms 15. Next, the ends of the second arms 17 located nearer the plate 13 will deform laterally, causing the contact forces between the standing edge sections 15a and 17a to increase. As a result, the energy absorbing effect is increased and the lateral deformation forces acting on the first arms 15 can be restricted.

In short, this embodiment can simplify the structure of the knee bolster 10F because the first arms 15 and second arms 17 are configured to fit together in such a manner as to restrict each other's lateral movement.

Since the deformation timing delay structures 40 undergo collapsing deformation so as to delay the deformation of the second arms 17, the second arms 17 can enter into and fit together with the corresponding first arm 15 in an appropriate manner. Additionally, when the impact load F contains a lateral load component, the deformation timing delay structures 40 react by undergoing lateral collapsing deformation, thereby causing the lateral contact forces between the first arms 15 and second arms 17 to increase. As a result, lateral offset input can be restricted in a reliable manner.

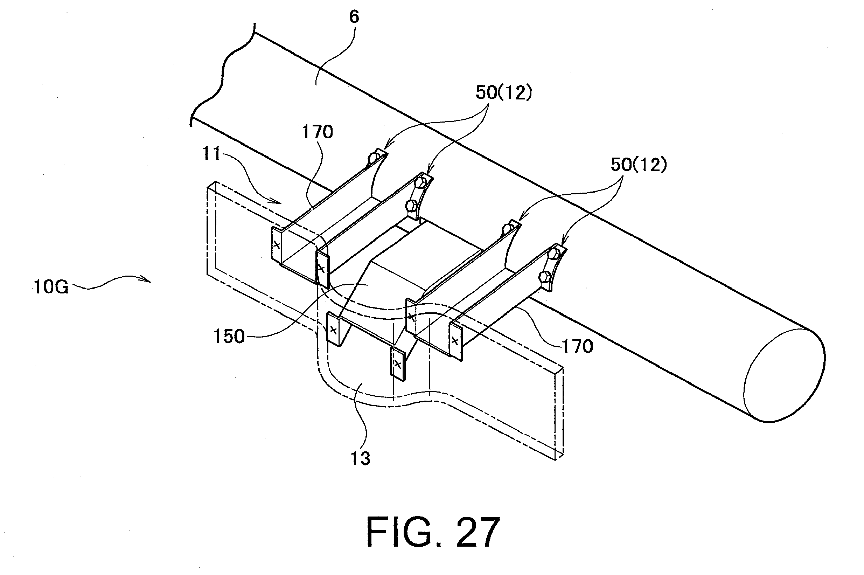

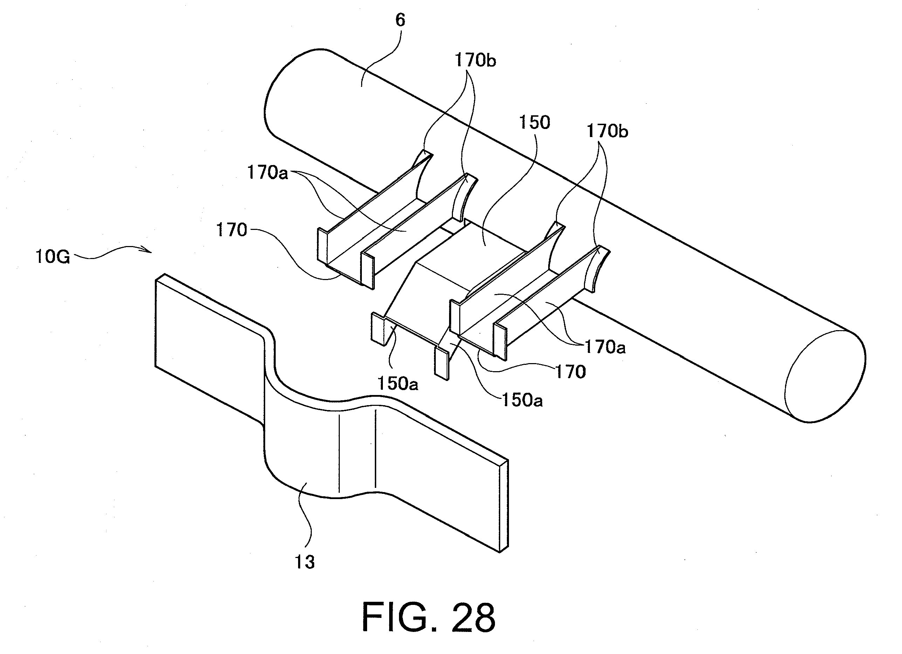

Figures 27 to 31 show a knee bolster 10G in accordance with an eighth embodiment of the present invention. Parts of the eighth embodiment that are the same as the parts of the first embodiment are indicated with the same reference numerals and explanations thereof are omitted for the sake of brevity. Figure 27 is a perspective view showing how the knee bolster 10G is mounted. Figure 28 is an exploded perspective view of the knee bolster 10G.

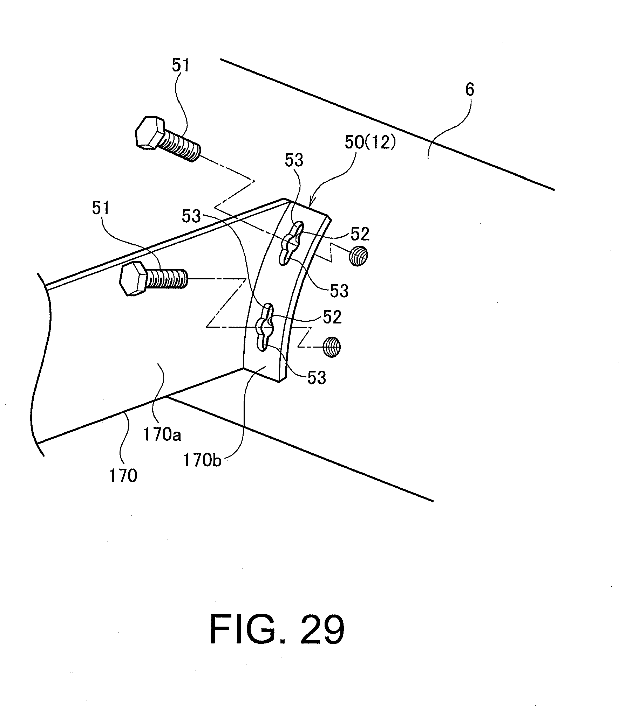

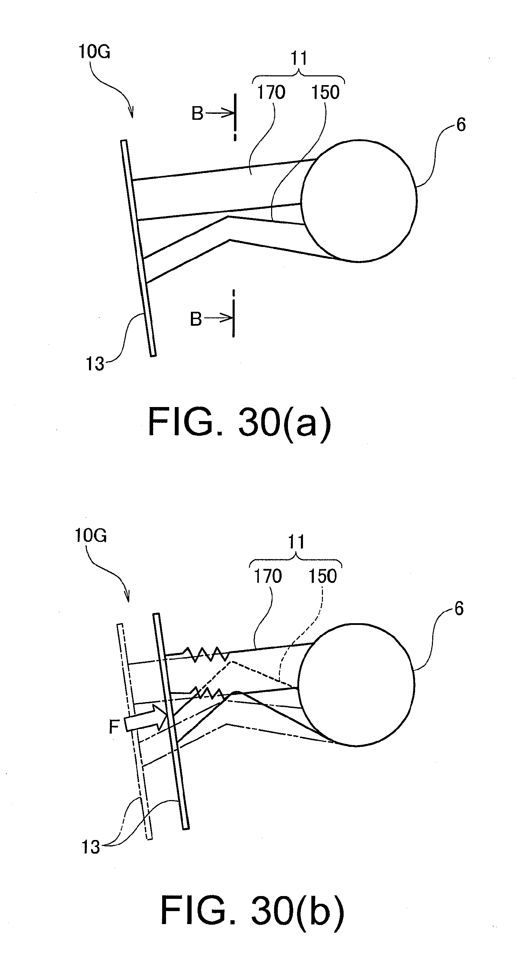

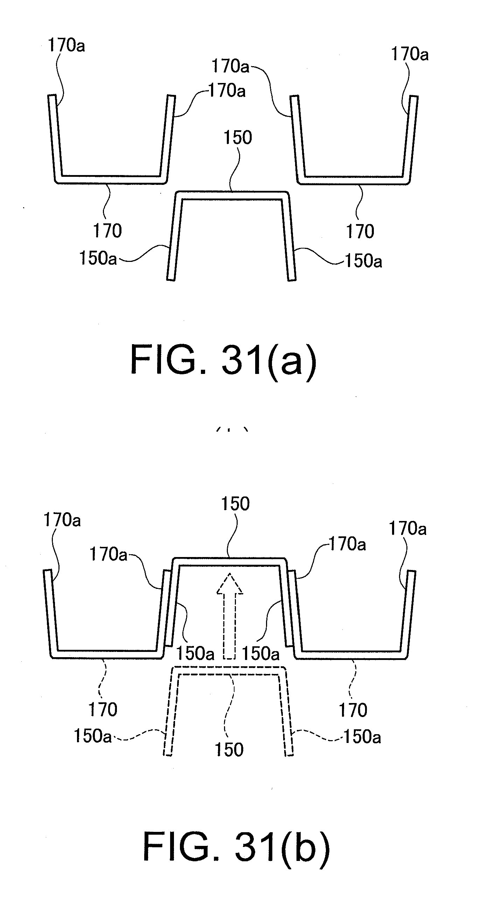

Figure 29 is an enlarged perspective view of the vertical offset input absorption structure. Figures 30(a) and 30(b) are cross sectional views illustrating in a sequential manner the behavior of the lateral offset input restriction structure. Figures 31 (a) and 31 (b) are cross sectional views that are taken along the section line B-B of Figure 30 and illustrate in a sequential manner the behavior of the lateral offset input restriction structure.

As shown in Figures 27 and 28, the knee bolster 10G in accordance with this embodiment is basically the same as the first embodiment in that it is provided with the lateral offset input restriction structure 11 and the vertical offset input absorption structure 12. In this embodiment, the lateral offset input restriction structure 11 includes a first arm 150 and a pair of second arms 170. The first arm 150 spans between the steering member 6 and the plate 13 against which the passenger's knees Dn impact. The first arm 150 serves as a deformation accepting structure configured to deform in the vertical and longitudinal directions of the vehicle when an impact load is imparted to the knee bolster 10 by the passenger's knees Dn. The second arms 170 are also arranged between the plate 13 and the steering member 6 and arranged closely adjacent to both laterally facing sides of the first arm 150. The second arms 170 serve as load transmitting members that contact the first arm 150 when the first arm 150 deforms, thereby restricting movement of the first and second arms 150 and 170 in the widthwise direction of the vehicle.

The first arm 150 protrudes rearward from the steering member 6 with a slight upward bend at a laterally intermediate position thereof. Both laterally facing sides of the first arm 150 are bent downward into standing edge sections 150a that serve to increase the strength of the first arm 150. The base end of the first arm 150 (the end nearer the steering member 6) is secured to the steering member 6 by welding or with bolts and nuts, and the tip end of the first arm 150 is welded to the back side (side facing frontward) of the plate 13 at a position generally in the middle of the plate 13 with respect to the widthwise direction of the vehicle.

The second arms 170 are straight and both laterally facing sides of the second arms 170 are bent upward into standing edge sections 170a that serve to increase the strength of the first arm 170. The second arms 170 are positioned slightly higher than the first arm 150 and arranged closely adjacent to the left and right sides of the first arm 150. The base ends of the second arms 170 are fastened to the steering member 6 with fastening bolts 51 installed through mounting flanges 170b provided on the end portions of the standing edge sections 170a. Meanwhile, the tip ends are fastened to edge portions of the back side (side facing frontward) of the plate 13 by welding.

The vertical offset input absorption structure 12 includes a pair of rotational restricting connectors 50. The rotational restricting connectors 50 serve to attach the lateral offset input restriction structure 11 to the steering member 6 such that it can swing vertically while exerting a rotational resistance against a prescribed rotational input.

In this embodiment, as shown in Figure 29, each of the rotational restricting connectors 50 is provided at the connecting portion of a respective on of the second arms 170. Each of the rotational restricting connectors 50 includes two upper and two lower fastening bolts 51 and a plurality of vertically oriented slits 53. The fastening bolts 51 serve to fasten the mounting flanges 170b to the steering member 6. The vertically oriented slits 53 have widths that are narrower than the body diameter of the fastening bolts 51. The slits 53 extend vertically through the centers of bolt holes 52 provided in the mounting flanges 170b.

Thus, with the knee holder 10G in accordance with this embodiment, when a frontal collision occurs and an impact load F is imparted to the knee bolster 10G, the first arm 150 deforms vertically and laterally such that the angle of the upward bend thereof becomes smaller from the curved bottom sections 15b as shown in Figure 30. Meanwhile, the second arms 170 undergo a collapsing deformation in the longitudinal direction of the vehicle, thereby absorbing energy.

When the first arm 150 deforms upward, the first arm 150 enters between the left and right second arms 170 as shown in Figure 31 and the standing edge sections 150a and 170a contact one another. The resulting contact forces (resistance forces) suppress the deformation of the first arm 150 and enhance the effect of controlling the impact load F. Additionally, the contact forces restrict the lateral deformation force acting on the first arm 150 and enable the impact energy to be absorbed irrespective of variation in the lateral positions of the passenger's knees Dn.

When the direction in which the knees Dn of the passenger D impact the knee bolster 10G is offset in the vertical direction, the mounting flanges 170b of the second arms 170 can rotate circumferentially about the steering member 6 in the upward or downward direction through the range of the vertical slits 53 provided therein, and thus absorbing the vertical offset input. Additionally, the impact load F can be absorbed because a reaction load is generate when the narrow vertical slits 53 are spread apart by the shaft portions of the fastening bolts 51.

Since the lateral offset input restriction structure 11 in accordance with this embodiment includes one first arm 150 and a pair of second arms 170 arranged closely adjacent to the left and right sides of the first arm 150, a simpler structure with fewer parts can be achieved and a weight advantage can be obtained.

Meanwhile, since the vertical offset input absorption structure 12 includes the rotational restricting connector 50 having the fastening bolts 51 serving to fasten the second arms 170 to the steering member 6 and the narrow vertical slits 53 provided so as to pass vertically through the bolt holes 52 of the second arms 170, a simpler structure with fewer parts can be achieved and a cost advantage can be obtained.

Although in this embodiment the vertical offset input absorption structure 12 is provided on the connecting portions of the second arms 170, it is also acceptable to provide the vertical offset input absorption structure 12 on the connecting portion of the first arm 150.

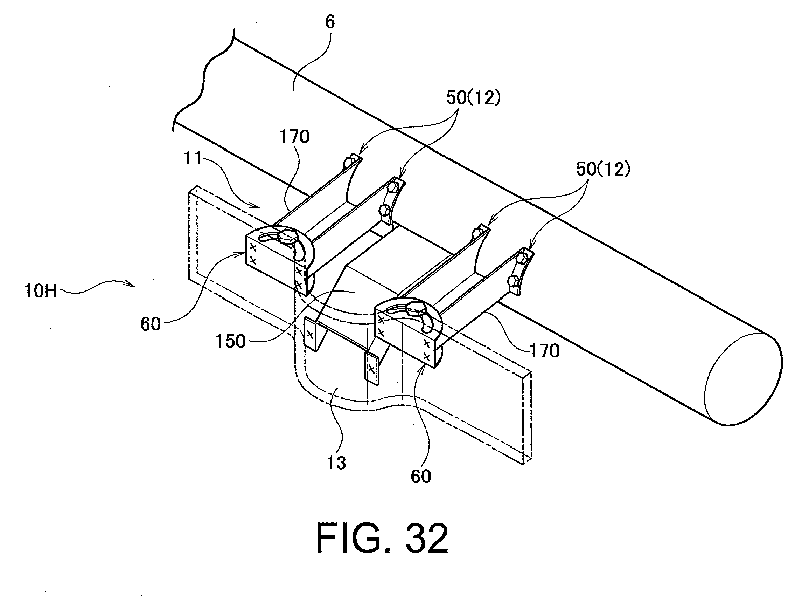

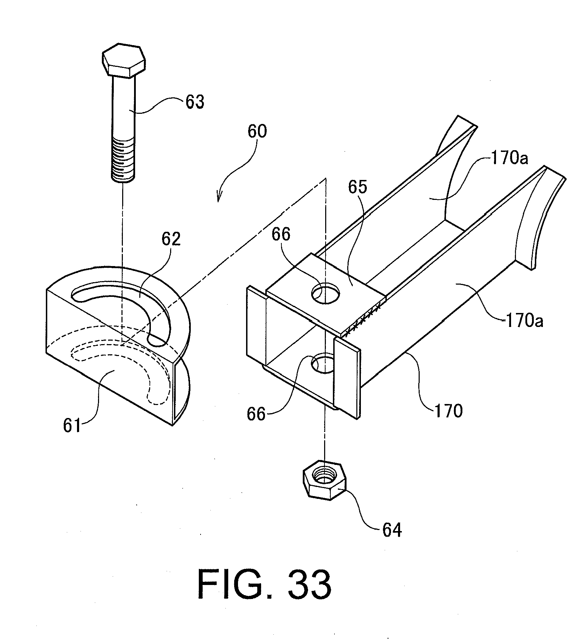

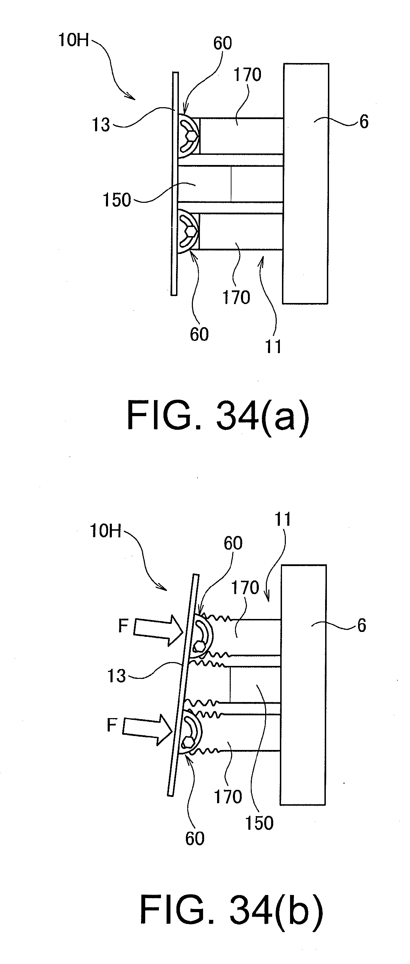

Figures 32 to 34 show a knee bolster 10H in accordance with a ninth embodiment of the present invention. Parts of the ninth embodiment that are the same as the parts of the first embodiment are indicated with the same reference numerals and explanations thereof are omitted for the sake of brevity. Figure 32 is a perspective view showing how the knee bolster 10H is mounted. Figure 33 is an exploded perspective view of a lateral rotational restricting structure 60 of the knee bolster 10H. Figures 34(a) and 34(b) are plan views illustrating in a sequential manner the behavior of the lateral rotational restricting structure 60.

As shown in Figures 32, the knee bolster 10H in accordance with this embodiment is basically the same as the first embodiment in that it is provided with the lateral offset input restriction structure 11 and the vertical offset input absorption structure 12. Furthermore, the lateral offset input restriction structure 11 and the vertical offset input absorption structure 12 are both configured in the same manner as in the eighth embodiment. The main difference is that, in this embodiment, the lateral rotational restricting structure 60 is provided between each of the second arms 170 and the plate 13. The lateral rotational restricting structure 60 serve to enable the plate 13 to rotate laterally when the direction in which the knees Dn of the passenger D impact the knee bolster 10H is offset in the lateral direction, thereby enabling the lateral offset input to be absorbed and energy to be absorbed.

As shown in Figure 33, each of the lateral rotational restricting structures 60 includes a C-shaped guide bracket 61, a bolt 63 and a nut 64. The guide bracket 61 is welded to an edge portion of the back side (side facing frontward) of the plate 13. The bolt 63 and the nut 64 serve to fasten the guide bracket 61 to the tip end of the respective second arm 170. Each of the guide brackets 61 has a pair of circular arc-shaped guide slits 62 provided in upper and lower walls thereof. The bolt 63 passes through the guide slits 62. The widths of the guide slits 62 are narrower than the body diameter of the bolt 63.

Each of the second arms 170 has a plate 65 attached on the top side of the tip ends of the standing edge sections 170a. Thus, the plates 65 connect the upper opening between the left and right standing edge sections 170a. Each of the second arms 170 has a pair of bolt holes 66 (one in the plate 65 and one in the bottom wall of the second arm 170 for receiving the bolt 63 therethrough.

Each of the guide brackets 61 is connected to the tip end of one of the second arms 170 by fitting the guide bracket 61 on the tip end of the second arm 170 such that the upper and lower walls of the guide bracket 61 overlap the outsides of plate 65 and the bottom wall of the second arm 170. The slits 62 are aligned with the bolt holes 66 and the bolt 63 is passed vertically through the slits 62 and the bolt holes 66. The nut 64 is then screwed onto the end of the bolt 63.

The knee bolster 10G in accordance with the present embodiment offers the same operational effects as are obtained with the eighth embodiment. In addition, the ninth embodiment provides the ability of the knee bolster 10G to rotate laterally when the direction in which the knees Dn of the passenger D impact the plate 13 is offset in a lateral direction (widthwise direction of the vehicle). More specifically, as shown in Figure 34, when the impact is laterally offset, the guide brackets 61 rotate about the bodies of the bolts 63 such that the plate 13 turns and faces squarely against the impact load F, thus absorbing the lateral offset input. Additionally, the energy can be absorbed by the bolts 63 sliding against and spreading apart the guide slits 62.

As a result, the impact load F can be made to act in the axial direction of the first arm 150 and the second arms 170 and the restriction of the lateral load component acting on the first arm 150 can be accomplished more effectively.

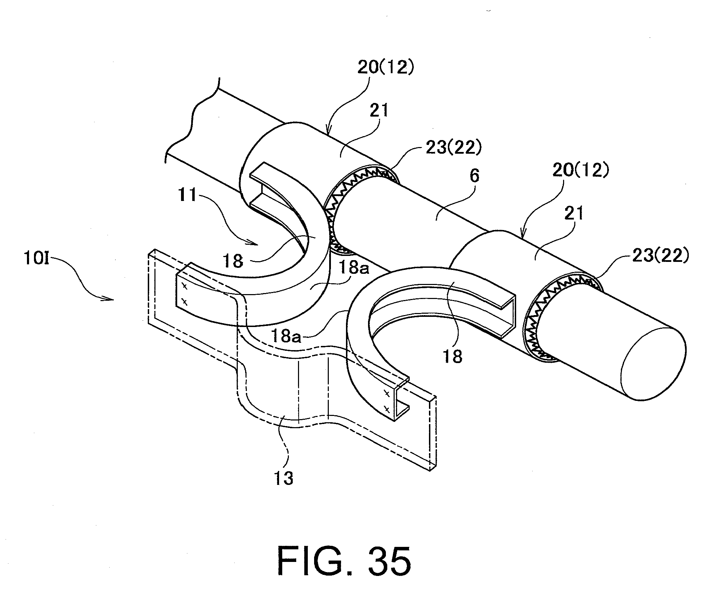

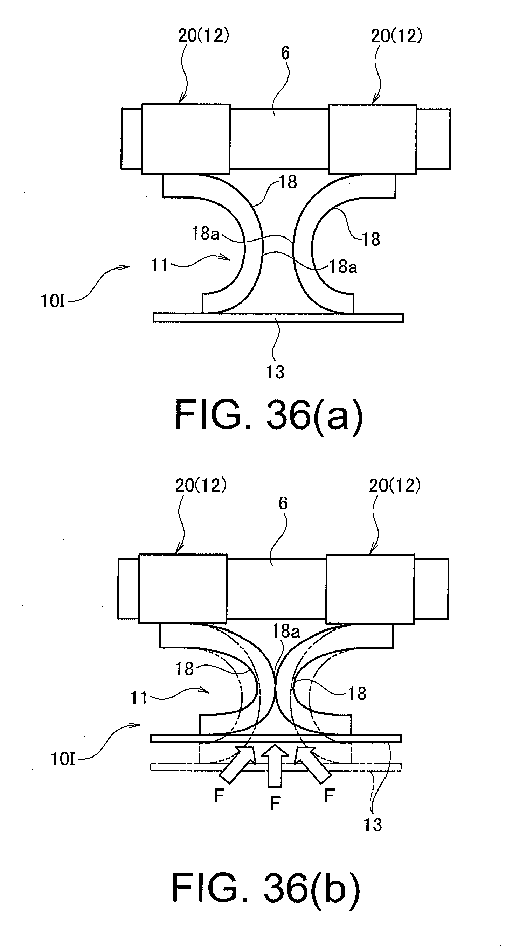

Figures 35 and 36 show a knee bolster 10l in accordance with a tenth embodiment of the present invention. Parts of the tenth embodiment that are the same as the parts of the first embodiment are indicated with the same reference numerals and explanations thereof are omitted for the sake of brevity. Figure 35 is a perspective view showing how the knee bolster 101 is mounted. Figures 36(a) and 36(b) are plan views illustrating in a sequential manner the behavior of the lateral offset input restriction structure 11.

As shown in Figures 35, the knee bolster 10l in accordance with this embodiment is basically the same as the first embodiment in that it is provided with the lateral offset input restriction structure 11 and the vertical offset input absorption structure 12. The lateral offset input restriction structure 11 includes a pair of arms 18 serving as deformation accepting structures. The arms 18 span between the steering member 6 and the plate 13 (which is the part of the knee bolster 101 against which the passenger's knees Dn impact). The arms 18 are configured to deform in the lateral (widthwise) and longitudinal directions of the vehicle when the passenger's knees Dn impact the plate 13. When the arms 18 undergo the lateral and longitudinal deformation, the portions thereof located at an intermediate position along the longitudinal direction contact each other and restrict further lateral movement.

Each of the arms 18 has a generally C-shaped cross sectional shape and is bent into a generally U-shaped form in a plan view. The arms 18 are arranged symmetrically between the plate 13 and the steering member 6 in a plan view such that the backs of the vertical walls of the C-shaped cross section thereof face each other in close proximity at the apex portions 18a of the U-shaped bends. The tip ends of the arms 18 are welded to edge portions of the back side (side facing frontward) of the plate 13.

The vertical offset input absorption structure 12 includes the rotational energy absorbing member 22 provided with the load limiters 23 similar to those of the first embodiment. The base end of each of the arms 18 is welded to the arm guide 21 of one of the rotational energy absorbing members 22.

Thus, with the knee holder 101 in accordance with this embodiment, when a frontal collision occurs and an impact load F is imparted to the knee bolster 101, the lateral offset input restriction structure 11 and the vertical offset input absorption structures 12 can, similarly to the first embodiment, absorb the impact energy in an efficient manner even if the direction of the impact is offset in the lateral and vertical directions. More specifically, since the lateral offset input restriction structure 11 includes two arms 18 that are bent into U-shaped forms in a plan view, when an impact load F acts on the plate 13, the arms 18 deform laterally and longitudinally such that the bent shapes thereof become more closed and the apex portions 18a contact each other, as shown in Figure 36. The arms 18 deform in this manner regardless of whether the impact load F is oriented squarely (straight) against the plate 13 or diagonally (offset) with respect to the plate 13. The contact force (resistance force) between the apex portions 18a suppresses further deformation of the arms 18 and enables the impact force F to be controlled in an effective manner. The contact force also enables the lateral offset input to be restricted in a more reliable manner.

Also, since the lateral offset input restriction structure 11 includes the left and right arms 18, the number parts can be reduced and the structure can be simplified. Furthermore, both a weight advantage and a cost advantage can be obtained.

While knee bolsters and passenger leg protecting methods in accordance with the present invention are explained herein using the first to tenth embodiments as examples, it will be apparent to those skilled in the art from this disclosure that various changes and modifications can be made herein without departing from the scope of the invention as defined in the appended claims. For example, the present invention is not limited to a driver's seat and can also be applied to a passenger seat. Also, the size, shape, location or orientation of the various components can be changed as needed and/or desired. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

This application claims priority from Japanese Patent Application Nos. 2006-080220, filed 23rd March 2006, and 2006-347926, filed 25th December 2006, the contents of which are expressly incorporated herein by reference.

## Claims

1. A knee bolster apparatus for a vehicle comprising:
a lateral offset input restriction structure arranged to restrict a lateral offset input component of an impact load imparted by a passenger's knee in a laterally offset direction and to promote deformation during a collision; and
a vertical offset input absorption structure arranged to absorb a vertical offset input component of the impact load imparted by the passenger's knee and to promote deformation during the collision.

2. An apparatus as claimed in claim 1 wherein the lateral offset input restriction structure comprises:
a deformation accepting structure located between a load input part and a vehicle structural member and arranged to deform in response to the impact load imparted by the passenger's knee during the collision; and at least one of:
a load transmitting support member located between the load input part and the vehicle structural member, and arranged to cooperate with the deformation accepting structure to restrict lateral movement of the deformation accepting structure in response to the impact load imparted by the passenger's knee during the collision; and
a pair of load transmitting support members located between the load input part and the vehicle structural member, and arranged near both laterally facing sides of the deformation accepting structure to contact the deformation accepting structure to restrict lateral movement of the deformation accepting structure and the load transmitting member in response to the impact load imparted by the passenger's knee during the collision.

3. An apparatus as claimed in claim 2, wherein the load input part and the load transmitting support member are connected together by at least one of:
a deformation timing delay structure arranged to deform by collapsing laterally to delay deformation of the load transmitting support member from the impact load imparted by the passenger's knee during the collision; and
a lateral rotational restricting structure that is arranged to rotate laterally when a direction in which the impact load imparted by the passenger's knees impact is offset in a lateral direction to absorb lateral offset input from the load input part.

4. An apparatus as claimed in any preceding claim wherein the lateral offset input restriction structure includes a pair of deformation accepting structures located between a load input part and a vehicle structural member and arranged to deform in response to the impact load imparted by the passenger's knees contacting an intermediate portion of each the deformation accepting structures.

5. An apparatus as claimed in any preceding claim wherein the vertical offset input absorption structure includes a rotational support structure connecting the lateral offset input restriction structure to a vehicle structural member with a prescribed reactive rotational force such that the lateral offset input restriction structure can swing against the prescribed reactive rotational force in response to the impact load imparted by the passenger's knee during the collision.

6. An apparatus as claimed in claim 5 wherein the rotational support structure comprises:
a rotational supporting member connecting the lateral offset input restriction structure to the vehicle structural member such that the lateral offset input restriction structure is rotatable relative to the vehicle structural member; and
a rotational energy absorbing member located between the rotational supporting member and the vehicle structural member to absorb a relative movement force between the rotational supporting member and the vehicle structural member.

7. An apparatus as claimed in claim 6 wherein :
the rotational supporting member and the structural member have non-circular shapes; and
the rotational energy absorbing member includes a load limiter arranged between the rotational supporting member and the vehicle structural member to absorb load changes that occur due to changes in a radial clearance existing between the rotational supporting member and the vehicle structural member.

8. An apparatus as claimed in claim 6 or claim 7 wherein the rotational energy absorbing member comprises:
a tapered section formed with the vehicle structural member;
an axial direction movement structure arranged to move the rotational supporting member toward the tapered section such that the tapered section enters into the rotational supporting member when the rotational supporting member rotates relative to the vehicle structural member; and
a load limiter located between the rotational supporting member and the vehicle structural member to absorb load changes that occur due to changes in a radial clearance existing between the rotational supporting member and the vehicle structural member.

9. An apparatus as claimed in any of claims 6 to 8 wherein the rotational energy absorbing member includes a load limiting spring connected between the rotational supporting member and the vehicle structural member to absorb load changes that occur when the rotational supporting member rotates relative to the vehicle structural member

10. An apparatus as claimed in any of claims 6 to 9 wherein the rotational energy absorbing member includes:
an axial direction movement structure arranged to move the rotational supporting member in an axial direction of a rotational axis of the rotational supporting member when the rotational supporting member rotates relative to the vehicle structural member; and
a load limiter connecting the rotational supporting member and the vehicle structural member together along the axial direction.

11. An apparatus as claimed in any of claims 6 to 10 wherein the rotational energy absorbing member includes a load limiting plate connecting the rotational supporting member and the vehicle structural member together in a rotational direction to absorb load transitions that occur when the rotational supporting member rotates relative to the vehicle structural member.

12. An apparatus as claimed in any of preceding claim wherein the vertical offset input absorption structure includes a rotational restricting connector connecting the lateral offset input restriction structure to a vehicle structural member such that the lateral offset input restriction structure can move vertically relative to the vehicle structural member while exerting a rotational resistance against a rotational load from the lateral offset input restriction structure.

13. An apparatus as claimed in any preceding claim wherein the rotational restricting connector includes a fastening bolt fixedly connecting a mounting flange of the lateral offset input restriction structure to the vehicle structural member, and a bolt hole with a vertical slit formed in the mounting flange with the vertical slit having a narrower width than a diameter of the fastening bolt located in the bolt hole.

14. A method for absorbing impact energy to a vehicle passenger comprising:
restricting a lateral offset input component of an impact load imparted by a passenger's knee against a knee bolster to lateral direction while promoting deformation of the knee bolster during a collision; and
absorbing a vertical offset input component of the impact load imparted by the passenger's knee against the knee bolster while promoting deformation of the knee bolster during the collision.

15. A vehicle having an apparatus or adapted to use a method as claimed in any preceding claim.
